# EUROPEAN PATENT APPLICATION

(11) **EP 3 396 019 A1**
(43) Date of publication of application: **31.10.2018**
(21) Application number: 16878351.2
(22) Date of filing: 06.12.2016
(51) Int. Cl.: C23C 18/20, C08J 7/00, C08J 7/04, C08K 3/22, C08K 3/30, C08K 5/521, C08K 5/5399, C08L 67/00, C08L 69/00, C08L 77/00, C08L 101/00, C23C 18/16

(54) **COMPOSITION FOR FORMING LASER DIRECT STRUCTURING LAYER, KIT, AND METHOD FOR MANUFACTURING RESIN MOLDED ARTICLE HAVING PLATING LAYER**

(30) Priority: 24.12.2015 JP 2015252126; 03.08.2016 JP 2016152752; 26.10.2016 JP 2016209925
(71) Applicant: Mitsubishi Engineering-Plastics Corporation, Tokyo 105-0021 (JP)
(72) Inventor: SUGIYAMA Masahide, Hiratsuka-shi Kanagawa 254-0016 (JP); KIKUCHI Tatsuya, Hiratsuka-shi Kanagawa 254-0016 (JP); YAMANAKA Yasushi, Hiratsuka-shi Kanagawa 254-0016 (JP)
(74) Representative: Ishiguro, Masaoki
(86) International application number: PCT/JP2016/086254
(87) International publication number: WO 2017/110458

(57) **Abstract**

To form a plated layer on a surface of the resin molded article without adding the LDS additive to the thermoplastic resin composition. The laser direct structuring layer-forming composition contains a curable compound, an organic solvent, and a laser direct structuring additive.

## Description

### TECHNICAL FIELD

This invention relates to a laser direct structuring layer-forming composition, and further to a kit having the laser direct structuring layer-forming composition and a thermoplastic resin composition. This invention also relates to a method for manufacturing a resin molded article with a plated layer, which uses the laser direct structuring layer-forming composition.

### BACKGROUND ART

With recent development in mobile phones including smartphone, many investigations have been made on methods of fabricating an antenna inside the mobile phones. There has been a particular need for enabling three-dimensional design of the antenna inside the mobile phones. Laser direct structuring (occasionally referred to as "LDS", hereinafter) having attracted public attention is one of known methods of forming such three-dimensional antenna. LDS technique is a technique of forming a plated layer, typically by irradiating laser to the surface of a resin molded article that contains an LDS additive, to thereby activate only a portion irradiated by the laser, and then by applying a metal to the activated portion. A feature of the technique is that a metal structure, such as antenna, may be fabricated directly on the surface of a resin base, without using an adhesive or the like. The LDS technique is disclosed for example in Patent Literatures 1 to 4.

Patent Literature 5 discloses conductor tracks placed on an electrically non-conductive supporting material, which are comprised of metal nuclei and of a metallization subsequently applied thereto, whereby the metal nuclei are produced by using electromagnetic radiation to break up electrically non-conductive metal compounds contained in the supporting material in a dispersed manner. The electrically non-conductive metal compounds are formed from insoluble inorganic oxides, which are highly stable with regard to heat, stable in an acidic or alkaline aqueous metallization bath, and which are higher oxides having the spinel structure, or are simple-d-metal oxides or mixtures thereof, or mixed metal compounds having spinel-like structures, and these metal compounds remain unchanged in unirradiated areas. Patent Literature 5 also describes a process of coating the electrically non-conductive higher oxides on a structural member to form a cover layer, allowing the cover layer to release heavy metal nuclei upon being irradiated by electromagnetic radiation selectively in a region where the conductor tracks will be formed, and then chemically reducing the region to metallize it.

### CITATION LIST

### PATENT LITERATURE

[Patent Literature 1] WO2011/095632 pamphlet
[Patent Literature 2] WO2011/076729 pamphlet
[Patent Literature 3] WO2011/076730 pamphlet
[Patent Literature 4] WO2012/128219 pamphlet
[Patent Literature 5] JP-T2-2004-534408

### SUMMARY OF THE INVENTION

### TECHNICAL PROBLEM

The LDS technique, when tried by way of adding the LDS additive to a thermoplastic resin, will however need a large amount of LDS additive. Although the LDS additive might act effectively in formation of the plated layer, it will be a foreign matter in the final form of resin molded article. In particular, depending on types of the LDS additive, it may adversely affect various performances, or some other additive contained in the thermoplastic resin composition may adversely affect the plated layer-forming performance of the LDS additive.

Meanwhile, Patent Literature 5 also describes that a process of coating the electrically non-conductive higher oxides on a supporting material to form a cover layer, allowing the cover layer to release heavy metal nuclei upon being irradiated by electromagnetic radiation, and then chemically reducing the irradiated region to metallize it. There is, however, no specific description on how the electrically non-conductive higher oxides are applied to cover the supporting material.

It is therefore an object of this invention to solve the problems described above, and to enable formation of the plated layer on the surface of the resin molded article, without adding the LDS additive to the thermoplastic resin composition.

### SOLUTION TO PROBLEM

After extensive investigations conducted under such situation, the present inventors found that the plated layer may properly be formed on the surface of the resin molded article, by forming on the surface of the resin molded article a layer that contains curable compound, organic solvent, and an LDS additive, even without mixing the LDS additive to the thermoplastic resin composition. The finding led us to complete this invention.

More specifically, the present inventors found that the above-described problems may be solved by means <1> below, and preferably by means <2> to <24>.
<1> A laser direct structuring layer-forming composition comprising: a curable compound, an organic solvent, and a laser direct structuring additive.
<2> The laser direct structuring layer-forming composition of <1>, wherein the curable compound is a resin.
<3> The laser direct structuring layer-forming composition of <1> or <2>, wherein the curable compound is a UV curable compound or a heat curable compound.
<4> The laser direct structuring layer-forming composition of any one of <1> to <3>, containing 0.05 to 70 parts by weight of the laser direct structuring additive, per 100 parts by weight in total of the curable compound and the organic solvent.
<5> The laser direct structuring layer-forming composition of any one of <1> to <4>, which is contains 20 to 80% by weight of the curable compound.
<6> A kit comprising: the laser direct structuring layer-forming composition described in any one of <1> to <5>, and a thermoplastic resin composition that contains a thermoplastic resin.
<7> The kit of <6>, wherein the thermoplastic resin composition contains substantially no laser direct structuring additive.
<8> The kit of <6> or <7>, wherein the thermoplastic resin is a crystalline resin.
<9> The kit of <8>, wherein the crystalline resin is a polyamide resin.
<10> The kit of <8>, wherein the crystalline resin is a thermoplastic polyester resin.
<11> The kit of <6> or <7>, wherein the thermoplastic resin is an amorphous resin.
<12> The kit of <11>, wherein the amorphous resin is a polycarbonate resin.
<13> The kit of any one of <6> to <12>, wherein the thermoplastic resin composition contains a dye and/or a pigment, and/or a flame retardant composition.
<14> The kit of any one of <6> to <12>, wherein the thermoplastic resin composition contains a pigment and/or flame retardant composition.
<15> The kit of any one of <6> to <14>, wherein the thermoplastic resin composition contains a black dye or a black pigment.
<16> The kit of any one of <6> to <15>, wherein the thermoplastic resin composition contains at least one of an antimony-containing flame retardant and an antimony-containing flame retardant auxiliary.
<17> The kit of any one of <6> to <16>, wherein the thermoplastic resin composition contains a halogen-containing flame retardant.
<18> The kit of any one of <6> to <15>, wherein the thermoplastic resin composition contains a phosphorus-containing flame retardant.
<19> The kit of <18>, wherein the phosphorus-containing flame retardant contains at least one selected from condensed phosphoric ester and phosphazene compound.
<20> The kit of any one of <6> to <15>, wherein the thermoplastic resin composition contains an organometallic salt-based flame retardant.
<21> A method for manufacturing a resin molded article with a plating layer, the method comprising:
   applying the laser direct structuring layer-forming composition described in any one <1> to <5>, onto the surface of a thermoplastic resin molded article, followed by curing; and
   then irradiating a laser to form the plating layer.
<22> The method for manufacturing a resin molded article with a plating layer of <21>, wherein the thermoplastic resin molded article contains a crystalline resin.
<23> The method for manufacturing a resin molded article with a plating layer of <21>, wherein the thermoplastic resin molded article contains an amorphous resin.
<24> The method for manufacturing a resin molded article with a plating layer of any one of <21> to <23>, using the kit described in any one of <6> to <20>.

### ADVANTAGEOUS EFFECTS OF INVENTION

It now became possible to form the plated layer on the surface of the resin molded article, even without mixing the LDS additive to the thermoplastic resin composition.

### BRIEF DESCRIPTION OF DRAWINGS

[FIG. 1] A schematic drawing illustrating conventional processes of forming a plated layer on the surface of a resin molded article.
[FIG. 2] A schematic drawing illustrating inventive processes of forming a plated layer on the surface of a resin molded article.

### DESCRIPTION OF EMBODIMENTS

This invention will be detailed below. In this specification, all numerical ranges given using "to", placed between numerals, mean the ranges containing both numerals as the lower and upper limit values. In this specification, all "groups" such as alkyl group may have a substituent, or do not necessarily have a substituent. All numbers of carbon atoms, when designated, shall indicate the numbers of carbon atoms including the carbon atoms contained in the substituent.

Solid and liquid in this invention are defined by the states at 25°C unless otherwise not specifically noted.

This invention characteristically uses the composition for forming an LDS layer which contains acurable compound, organic solvent, and an LDS additive, separately from the resin molded article. With such configuration, it now becomes possible to form the plated layer on the surface of the resin molded article, without mixing the LDS additive to the thermoplastic resin composition.

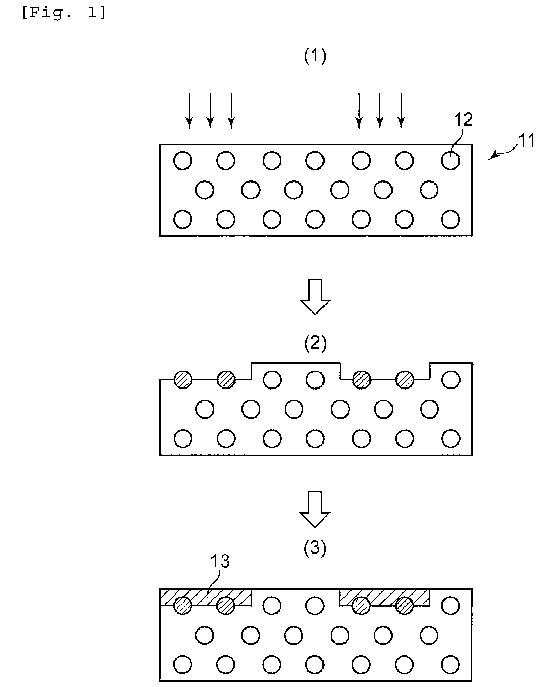

This will further be explained referring to the attached drawings. FIG. 1 illustrates conventional processes of forming the plated layer on the surface of the resin molded article. In FIG. 1, reference numeral 11 denotes a molded article of a thermoplastic resin composition, and 12 denotes an LDS additive. In the conventional method, the thermoplastic resin composition has been subjected to molding with the LDS additive mixed therein. When laser is irradiated, as illustrated in FIG. 1(1), only to portions where the plated layers are expected to be formed (portions pointed by the arrows FIG. 1(1)), the LDS additive is activated at the portions irradiated by the laser (FIG. 1(2)). When applied with a plating solution, the resin molded article having been kept in such activated state will have plated layers 13 formed on the surface thereof only in the portions irradiated by the laser (FIG. 1(3)).

Although the conventional method has been approved to be beneficial, addition of the LDS additive to the thermoplastic resin inevitably increases the amount of addition of the LDS additive relative to the resin molded article. In more detail, the LDS additive will suffice if it resides only in the surficial portion of the resin molded article on which the plated layer is formed, but when mixed into the thermoplastic resin composition, the LDS additive will be dispersed throughout the resin molded article as illustrated in FIG. 1(1), and this means excessive mixing of the LDD additive than required for forming the plated layer. Some of the LDS additive is expensive, and has been desired to be reduced in the amount relative to the resin molded article. Another problem is that the LDS additive, although beneficial in the process of forming the plated layer, will be a foreign matter in the final form of resin molded article. Some types of the LDS additive will even adversely affect various performances. More specifically, the LDS additive may damage glass fiber to prevent its mechanical strength from being demonstrated. Some of the resin compositions added with an additive such as flame-retardant composition or pigment may fail in properly allowing the plated layer to be formed thereon, even if the LDS additive were added.

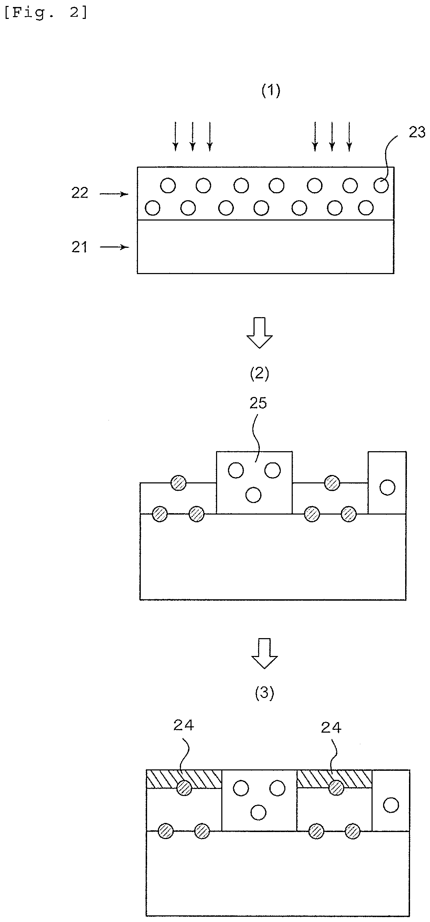

Meanwhile, FIG. 2 is a schematic drawing illustrating inventive processes of forming the plated layer on the surface of the resin molded article. In FIG. 2(1), reference numeral 21 denotes a resin molded article, 22 denotes an LDS layer, and 23 denotes an LDS additive.

When the LDS layer-forming composition of this invention is applied (typically by coating) to the surface of the resin molded article 21, a thin LDS layer 22 having the LDS additive 23 uniformly dispersed therein is formed (FIG. 2(1)).

Next, the LDS layer 22 is cured, and laser is irradiated on an area thereof necessary for forming the plating layer (FIG. 2(1)). Upon irradiation, the LDS additive is activated in the area irradiated with laser. With the LDS additive thus activated, a plating liquid is applied to the surface of the resin molded article. The resin molded article after application of the plating liquid has formed thereon a plating layer 24, only in the area having been irradiated by laser (FIG. 2(4)). As a consequence, it now becomes possible to form the plating layer on the surface of the resin molded article, even without adding the LDS additive to the thermoplastic resin composition. In this invention, the plating layer is preferably formed under an atmosphere at 10 to 50°C, more preferably at 15 to 45°C, and particularly at 20 to 40°C. It is particularly preferable that no heat, other than heat accompanied by laser irradiation, will be applied.

In order to form a uniform plating layer, it is necessary that the LDS layer-forming composition can form the LDS layer in which the LDS additive disperses nearly evenly over the surface of the resin molded article. Since this invention uses the composition that includes the curable compound and the organic solvent, and has the LDS additive dispersed therein, so that the LDS layer may be formed, with the LDS additive nearly evenly dispersed therein, over the surface of the resin molded article. When the curable compound is cured in such LDS layer, the LDS additive is left dispersed over the surface of the resin molded article. In particular, the LDS layer-forming composition prepared by adding the LDS additive to a coating material has an advantage in that the layer after cured will not be peeled off so easily. The resin molded article that uses a polycarbonate resin or other amorphous resin has been likely to produce surface irregularity upon irradiation by layer in the process of forming the plating layer. In contrast in this invention, such irregularity may be suppressed to a relatively low level.

Now, the LDS layer-forming composition, the kit, and the method for manufacturing a resin molded article with a plating layer of this invention will be detailed below.

### <Composition for Forming Laser Direct Structuring Layer>

The laser direct structuring layer-forming composition characteristically contains acurable compound, organic solvent, and a laser direct structuring additive. With such configuration, it now becomes possible to form the plated layer on the surface of the resin molded article, without mixing the LDS additive to the thermoplastic resin composition.

### <<Curable Compound>>

The curable compound used in this invention is preferably a substance soluble or dispersible in the organic solvent, and more preferably a substance soluble in the organic solvent. Temperature of dissolution or dispersion is preferably room temperature (25°C, for example), although not specifically be limited.

The curable compound might be a low molecular weight compound, but is preferably a resin.

The curable compound used in this invention is preferably, for example, a curable compound that cures at normal temperature by the aid of moisture in the air or the like (cold curing type curable compound), UV curable compound or heat curable compound, and is more preferably UV curable compound or heat curable compound. Use of the curable compound that is curable by UV or heat takes an advantage over the cold curing type curable compound that need be stored at low temperatures, in terms of handleability at normal temperature.

The curable compound is exemplified by urethane-based resin, epoxy-based resin, polyester-based resin, silicone-based resin, acryl-based resin, and polyvinyl chloride-based resin.

The content of curable compound in the LDS layer-forming composition of this invention is preferably 20 to 80% by weight, and more preferably 25 to 75% by weight in the LDS layer-forming composition. Only one type, or two or more types of the curable compounds may be contained. When two or more types are contained, the total content preferably falls within the above described ranges.

### <<Organic Solvent>>

The LDS layer-forming composition contains the organic solvent. With the organic solvent contained therein, the LDS additive will be allowed to disperse more uniformly in the LDS layer-forming composition, and thereby the obtainable LDS layer will have the LDS additive uniformly dispersed therein.

The organic solvent is not specifically limited so far as it can allow the curable compound to dissolve or disperse therein, and is exemplified by thinner and solvent naphtha.

The amount of mixing of the organic solvent in the LDS layer-forming composition of this invention is preferably 20 to 80% by weight, and more preferably 25 to 75% by weight. It is also recommendable to adjust the viscosity by controlling the amount of addition of the organic solvent, in order to make the LDS layer-forming composition of this invention easier to coat on the resin molded article. From the viewpoint of coatability, the viscosity of the LDS layer-forming composition at 25°C is preferably 0.01 to 200 Pa·s, and more preferably 0.1 to 150 Pa·s.

### <<Coating material>>

In this invention, any known coating material may be employed as the composition that contains the curable compound and the organic solvent. The coating material is preferably a coating material for resin bases. Specific examples of the coating material for resin bases employable in this invention include Retan PG80III Clear from Kansai Coating material Co., Ltd.; Origiplate Z Metal Silver from Origin Electric Co., Ltd.; Neopol 8476 from U-PICA, Co., Ltd.; nax MIGHTYLAC G-II KB-type clear from Nipponcoating material Co., Ltd. ; HIGH-METAL KD2850 Silver from Cashew Co., Ltd.; 6110 Clear from Cashew Co., Ltd.; MILLION Clear from Kansai Coating material Co., Ltd.; and Vinybon 100 Clear, from Kansai Coating material Co., Ltd.

The coating material includes those having the base component and the organic solvent preliminarily mixed therein, and those needing mixing of the base component and the organic solvent for each usage. Either type may suitably be used in this invention. The coating material may further contain a hardener. In this invention, the base component and the hardener correspond to the curable compound.

The LDS layer-forming composition of this invention also excels in manufacturability, since it can be prepared by adding the LDS additive to commercially available coating materials. By using the coating material for resins, it also becomes possible to improve adhesiveness between the resin molded article and the LDS layer.

### <<LDS Additive>>

The LDS layer-forming composition contains the LDS additive.

The LDS additive in this invention means a compound capable of forming thereon the plated layer, when 10 parts by weight of a candidate additive of the LDS additive is added to 100 parts by weight of the thermoplastic resin (for example, polyamide resin and/or polycarbonate resin), exposed to YAG laser of 1064 nm wavelength irradiated at an output of 13 W, a frequency of 20 kHz, and scanning speed of 2 m/s, and then subjected to electroless plating using a MID Copper 100 XB Strike plating bath (from MacDermid Performance Solutions) so as to apply a metal to the laser-irradiated surface.

The LDS additive used in this invention may either be synthetic ones or commercially available ones. The commercially available ones are not always necessarily be those marketed as the LDS additive, but may be substances intended for other applications so long as they satisfy the requirements of the LDS additive in this invention. Only a single species of the LDS additive may be used, or two or more species thereof may be used in combination.

Preferred embodiments of the LDS additive used in this invention will be described below, of course without limiting this invention. The LDS additives of the first and second embodiments are preferable in this invention.

A first embodiment of the LDS additive used this invention relates to a compound containing copper and chromium. The LDS additive of the first embodiment preferably contains 10 to 30% by weight of copper. It also preferably contains 15 to 50% by weight of chromium. The LDS additive of the first embodiment is preferably an oxide containing copper and chromium.

Copper and chromium are preferably contained in the form of spinel structure. The spinel structure is one of representative crystal structures found in AB₂O₄-type compound (A and B represent metal elements) that belongs to double oxide.

The LDS additive of the first embodiment may contain other trace metal besides copper and chromium. Such other metal is exemplified by antimony, tin, lead, indium, iron, cobalt, nickel, zinc, cadmium, silver, bismuth, arsenic, manganese, magnesium and calcium, wherein manganese is preferable. These metals may exist in the form of oxide.

A preferable example of the LDS additive of the first embodiment is an LDS additive containing 10% by weight or less of metal oxide other than copper chromium oxide.

A second embodiment of the LDS additive used in this invention relates to an oxide containing antimony and/or phosphorus, and tin, and is preferably an oxide containing antimony and tin.

The LDS additive of the second embodiment is preferably such that the amount of mixing tin is larger than the amount of mixing of phosphorus and/or antimony, and preferably such that tin accounts for 80% by weight or more of the total content of phosphorus and antimony.

In particular, the LDS additive of the second embodiment is preferably an oxide containing antimony and tin, wherein the amount of mixing of tin is preferably larger than the amount of mixing of antimony, and the tin content relative to the total content of tin and antimony is preferably 80% by weight or more.

More specifically, the LDS additive of the second embodiment is exemplified by antimony-doped tin oxide, antimony oxide-doped tin oxide, phosphorus-doped tin oxide, and phosphorus oxide-doped tin oxide; wherein antimony-doped tin oxide, and antimony oxide-doped tin oxide are preferable; and antimony oxide-doped tin oxide is more preferable. For example, in the LDS additive containing phosphorus and tin oxide, the content of phosphorus is preferably 1 to 20% by weight. In the LDS additive containing antimony and tin oxide, the content of antimony is preferably 1 to 20% by weight. In the LDS additive containing phosphorus, antimony and tin oxide, the content of phosphorus is preferably 0.5 to 10% by weight, and the content of antimony is preferably 0.5 to 10% by weight.

The LDS additive of a third embodiment used in this invention preferably contains at least two species of metals, and an electrically conductive oxide having a resistivity of 5 × 10³ Ω· cm or smaller. The electrically conductive oxide preferably has a resistivity of 8 × 10² Ω·cm or smaller, more preferably 7 × 10² Ω·cm or smaller, and even more preferably 5 × 10² Ω·cm or smaller. The lower limit may be, but not specifically limited to, 1 × 10¹ Ω·cm or above for example, and more preferably 1 × 10² Ω·cm or above.

The resistivity of the electrically conductive oxide in this invention is generally given by powder resistivity, which is measured using a tester "Model 3223" from Yokogawa Electric Corporation, after placing 10 g of fine powder of the electrically conductive oxide into a cylinder with an inner coating of Teflon (registered trademark) and an inner diameter of 25 mm, and by pressurizing the powder at 100 kg/cm² (packing ratio = 20%).

Although the LDS additive used in the third embodiment is not specifically limited so long as it contains the electrically conductive oxide having a resistivity of 5 × 10³ Ω·cm or smaller, it preferably contains at least two species of metals, and more specifically contains the Group n (n is an integer of 3 to 16) metal in the periodic table, and the Group (n + 1) metal. n preferably represents an integer of 10 to 13, and more preferably 12 or 13.

In the LDS additive used in the third embodiment, assuming now the total content of the Group n (n is an integer of 3 to 16) metal in the periodic table and the Group (n + 1) metal as 100 mol%, the content of either one metal is preferably 15 mol% or less, more preferably 12 mol% or less, and particularly 10 mol% or less. The lower limit is 0.0001 mol% or above, but without special limitation. By limiting the contents of two or more species of metals within the above-described ranges, the platability may be improved. In this invention, Group (n + 1)-doped Group n metal oxide is particularly preferable.

In the LDS additive used in the third embodiment, 98% by weight or more of metal component contained in the LDS additive is preferably composed of the Group n metal and the Group (n + 1) metal in the periodic table.

Metals that belong to Group n in the periodic table are exemplified by those that belong to Group 3 (scandium, yttrium), Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), Group 15 (arsenic, antimony, etc.), and Group 16 (selenium, tellurium, etc.). Also metal oxides containing these metals are usable. Among them, Group 12 (n = 12) metal or metal oxide thereof is preferable, and zinc is more preferable.

Metals that belong to Group (n + 1) in the periodic table are exemplified by those that belong to Group 4 (titanium, zirconium, etc.), Group 5 (vanadium, niobium, etc.), Group 6 (chromium, molybdenum, etc.), Group 7 (manganese, etc.), Group 8 (iron, ruthenium, etc.), Group 9 (cobalt, rhodium, iridium, etc.), Group 10 (nickel, palladium, platinum), Group 11 (copper, silver, gold, etc.), Group 12 (zinc, cadmium, etc.), Group 13 (aluminum, gallium, indium, etc.), Group 14 (germanium, tin, etc.), 15 Group (arsenic, antimony, etc.), and Group 16 (selenium, tellurium, etc.). Also metal oxides containing these metals are usable. Among them, Group 13 (n + 1 = 13) metal or metal oxide thereof is preferable, aluminum or gallium is more preferable, and aluminum is even more preferable.

The LDS additive used in the third embodiment may contain metal other than the electrically conductive metal oxide. The metal other than the electrically conductive metal oxide is exemplified by antimony, titanium, indium, iron, cobalt, nickel, cadmium, silver, bismuth, arsenic, manganese, chromium, magnesium, and calcium. These metals may exist in the form of oxide. The content of each of these metals is preferably 0.01% by weight or less relative to the LDS additive.

From the viewpoint of increasing the L value, the LDS additive used in the third embodiment preferably has an antimony content of 3% by weight or less relative to the LDS additive, more preferably 1% by weight or less, and even more preferably 0.01% by weight or less. It is particularly preferable to contain substantially no antimony. "To contain substantially no antimony" herein means that antimony is not contained to an extent enough to affect the effects of this invention.

The LDS additive used in this invention preferably has an average particle size of 0.01 to 100 µm, more preferably 0.05 to 30 µm, and even more preferably 0.05 to 15 µm. With such average particle size, platability will be improved since the LDS additive can be dispersed more uniformly in the LDS layer forming composition.

The amount of mixing of the LDS additive in the LDS layer-forming composition is preferably 0.01 to 50% by weight. The amount is also preferably 0.05 parts by weight or more relative to 100 parts by weight in total of the curable compound and the organic solvent, more preferably 0.3 parts by weight or more, even more preferably 1 part by weight or more, and yet more preferably 3 parts by weight or more. The amount is also preferably 70 parts by weight or less relative to 100 parts by weight in total of the curable compound and the organic solvent, more preferably 50 parts by weight or less, even more preferably 40 parts by weight or less, yet more preferably 30 parts by weight or less, further more preferably 23 parts by weight or less, further particularly preferably 15 parts by weight or less. Within such ranges, the plating will have an improved appearance.

This invention is beneficial in that the amount of LDS additive in the final form of the resin molded article with the plated layer may be reduced.

### <<Other Ingredients of LDS Layer-Forming Composition>>

The LDS layer-forming composition used in this invention may be composed solely of the curable compound, the organic solvent and the LDS additive, or may alternatively contain other ingredients. Such other ingredients are exemplified by those usually contained in coating materials and curable compounds, and in particular by dispersion aid, sensitizer, compatibilizer, dye and pigment. One preferred embodiment of the LDS layer-forming composition of this invention is exemplified by an LDS layer-forming composition substantially composed of the curable compound, the organic solvent and the LDS additive only. Also exemplified is an LDS layer-forming composition substantially composed of the coating material and the LDS additive only. Now "substantially composed of ... only" means that any other components other than those described above account for 5% by weight or less of the amount of addition of the LDS additive, which is more preferably 3% by weight or less, even more preferably 1% by weight or less, and yet more preferably 0.1% by weight or less.

### <<Characteristics of LDS Layer-Forming Composition>>

The LDS layer-forming composition is a dispersion liquid having the LDS additive dispersed therein. The curable compound may be dissolved or dispersed in the organic solvent, and is preferably dissolved as described above. By applying such LDS layer-forming composition on the surface of the resin molded article, it now becomes possible to form the LDS layer having the LDS additive evenly dispersed therein. Hence, it suffices that the LDS layer-forming composition can exist in the form of dispersion liquid having the LDS additive dispersed therein at least immediately before being applied to the surface of the resin molded article, in which the LDS additive is not always necessarily kept dispersed after allowed to stand still over a long period of time.

In this invention, ratio by weight of the curable compound and the solvent is preferably 20:80 to 80:20, and more preferably 25:75 to 75:25. Within these ranges, the LDS additive will have good dispersibility, and will tend to have improved platability.

### <Kit>

The kit of this invention includes the laser direct structuring layer-forming composition, and the thermoplastic resin composition that contains the thermoplastic resin. By using such kit, it now becomes possible to form the plating layer on the surface of the resin molded article, even without adding the LDS additive to the thermoplastic resin composition.

In particular in this invention, the amount of addition of the LDS additive contained in the LDS layer-forming composition is preferably set to 3.0% by weight or less of the amount of the thermoplastic resin contained in the thermoplastic resin composition, which is more preferably 2.0% by weight or less, and particularly may be 1.5% by weight or less. The lower limit value of the amount of addition of the LDS additive may, for example, be 0.5% by weight or above.

### <<LDS layer-forming composition>>

The LDS layer-forming composition described above will suffice for LDS layer-forming composition, and is defined by the same preferable ranges.

### <<Thermoplastic Resin Composition that Contains Thermoplastic Resin>>

The thermoplastic resin composition in this invention contains the thermoplastic resin. The thermoplastic resin is not specifically limited in terms of the type, and may be a crystalline resin or may be an amorphous resin.

With a conventional resin composition that contains an amorphous resin and an LDS additive, the surface irradiated by laser would have irregularity. In contrast, with the LDS layer-forming composition of this invention, the surface can remain smooth even when the amorphous resin is used. Specific examples of the thermoplastic resin include polycarbonate resin; mixture of polycarbonate resin and polystyrene resin; alloy of polyphenylene ether resin and polystyrene resin; alloy of polyphenylene ether resin and polyamide resin; thermoplastic polyester resin; methyl methacrylate/acrylonitrile/butadiene/styrene copolymer resin; methyl methacrylate/styrene copolymer resin; methyl methacrylate resin; rubber-toughened methyl methacrylate resin; polyamide resin; polyacetal resin; polylactic acid-based resin; polyolefin resin; and polyphenylene sulfide resin. In this invention, preferably contained is at least one of polycarbonate resin, mixture of polycarbonate resin and polystyrene resin, thermoplastic polyester resin and polyamide resin; more preferably contained is at least one of polycarbonate resin, mixture of polycarbonate resin and polystyrene resin, and polyamide resin; and even more preferably contained is polyamide resin.

The crystalline resin is preferably polyamide resin or thermoplastic polyester resin. The amorphous resin is preferably polycarbonate resin.

Preferred embodiments will be explained below.

### Mode of Containing Polycarbonate Resin as Major Ingredient

A first embodiment of the thermoplastic resin in this invention is exemplified by a mode in which the thermoplastic resin contains a polycarbonate resin as a major ingredient. In the first embodiment, the polycarbonate resin preferably accounts for 30 to 100% by weight of the total resin component, more preferably 50 to 100% by weight, and still more preferably 80 to 100% by weight.

### Polycarbonate Resin

The polycarbonate resin used in this invention may be any of aromatic polycarbonate, aliphatic polycarbonate, and aromatic-aliphatic polycarbonate without special limitation. Among these, preferably be aromatic polycarbonate, and more preferably be thermoplastic aromatic polycarbonate polymer or copolymer, obtained by allowing an aromatic dihydroxy compound to react with phosgene or carbonate diester.

The aromatic dihydroxy compound is preferably exemplified by 2,2-bis(4-hydroxyphenyl)propane (i.e., bisphenol A), tetramethylbisphenol A, bis(4-hydroxyphenyl)-p-diisopropylbenzene, hydroquinone, resorcinol, and 4,4-dihydroxydiphenyl, and preferably by bisphenol A. For the purpose of preparing a composition with a high flame retardance, usable is such aromatic dihydroxy compound having bound thereto one or more tetraalkylphosphonium sulfonate, or a polymer or oligomer having a siloxane structure terminated on both ends by phenolic hydroxy groups.

Preferable examples of the polycarbonate resin used in this invention include polycarbonate resin derived from 2,2-bis(4-hydroxyphenyl)propane; and polycarbonate copolymer derived from 2,2-bis(4-hydroxyphenyl)propane and other aromatic dihydroxy compound.

The polycarbonate resin preferably has a molecular weight of 14,000 to 30,000, more preferably 15,000 to 28,000, and even more preferably 16,000 to 26,000, in terms of viscosity-average molecular weight calculated from the viscosity of solution, when measured in methylene chloride as a solvent at 25°C. With the viscosity-average controlled within the above-described ranges, the resin will desirably have an improved mechanical strength and an improved formability.

Methods of manufacturing the polycarbonate resin is not specifically limited, so that polycarbonate resins manufactured either by the phosgene process (interfacial polymerization) or the fusion process (transesterification) may be used. In this invention, also usable is a polycarbonate resin manufactured by a typical fusion process followed by a process of controlling the content of terminal hydroxy groups.

The polycarbonate resin usable in this invention includes not only a polycarbonate resin as a virgin material, but also a polycarbonate resin regenerated from used products, that is, so-called material-recycled polycarbonate resin.

Regarding other polycarbonate resins usable in this invention, for example the description in paragraphs [0018] to [0066] of JP-A-2012-072338 may be referred to, the content of which is incorporated into the present specification.

The thermoplastic resin composition used in this invention may contain only a single species, or two or more species, of polycarbonate resins.

### Mode of Containing Polycarbonate Resin and Styrene Resin

A second embodiment is exemplified by a case where the thermoplastic resin contains a polycarbonate resin and a styrene resin. More specifically, the resin preferably contains a resin component containing 40% by weight or more and 100% by weight or less of polycarbonate resin, and more than 0% by weight and 60% by weight or less of styrene-based resin, more preferably contains 40 to 90% by weight of polycarbonate resin and 60 to 10% by weight of styrene-based resin, and even more preferably contains 60 to 80% by weight of polycarbonate resin and 40 to 20% by weight of styrene-based resin.

As for details of the polycarbonate resin, the description of the first embodiment may be referred to.

### Styrene-Based Resin

The styrene-based resin means at least one polymer species selected from the group consisting of styrene-based polymer composed of styrene-based monomers, copolymer formed by styrene-based monomer and other copolymerizable vinyl-based monomer, and copolymer obtained by polymerizing, under the presence of a rubbery polymer, styrene-based monomer or styrene-based monomer with other copolymerizable vinyl-based monomer.

Specific examples of the styrene-based monomer include styrene and styrene derivatives such as α-methylstyrene, p-methylstyrene, divinylbenzene, ethylvinylbenzene, dimethylstyrene, p-t-butylstyrene, bromostyrene and dibromostyrene. Among them, styrene is preferable. They may be used independently, or in a mixed form of two or more species.

The vinyl-based monomer copolymerizable with the styrene-based monomer is exemplified by vinylcyan compounds such as acrylonitrile and methacrylonitrile; alkyl acrylate esters such as methyl acrylate, ethyl acrylate, propyl acrylate, butyl acrylate, amyl acrylate, hexyl acrylate, 2-ethylhexyl acrylate, octyl acrylate, and cyclohexyl acrylate; alkyl methacrylate esters such as methyl methacrylate, ethyl methacrylate, propyl methacrylate, butyl methacrylate, amyl methacrylate, hexyl methacrylate, 2-ethylhexyl methacrylate, octyl methacrylate and cyclohexyl methacrylate; aryl acrylate esters such as phenyl acrylate and benzyl acrylate; aryl methacryalte esters such as phenyl methacrylate and benzyl methacrylate; epoxy group-containing acrylic esters or methacrylic esters such as glycidyl acrylate and glycidyl methacrylate; maleimide-based monomers such as maleimide, N,N-methylmaleimide, and N-phenylmaleimide; and α,β-unsaturated carboxylic acids or anhydrides thereof such as acrylic acid, methacrylic acid, maleic acid, maleic anhydride, fumaric acid, and itaconic acid.

The rubbery polymer copolymerizable with the styrene-based monomer is exemplified by polybutadiene; polyisoprene; styrene-butadiene random copolymer and block copolymer; acrylonitrile-butadiene random copolymer and block copolymer; acrylonitrile-butadiene copolymer; copolymer of alkyl acrylate ester or alkyl methacrylate ester with butadiene; polybutadiene-polyisoprene diene-based copolymer; ethylene-isoprene random copolymer and block copolymer; copolymer of ethylene and α-olefin such as ethylene-butene random copolymer and block copolymer; copolymer of ethylene and α,β-unsaturated carboxylic acid ester such as ethylene-methacrylate copolymer, and ethylene-butyl acrylate copolymer; ethylene-vinyl acetate copolymer; ethylene-propylene-nonconjugated diene terpolymer such as ethylene-propylene-hexadiene copolymer; acrylic rubber; and composite rubber composed of polyorganosiloxane rubber and polyalkyl acrylate or methacrylate rubber.

This type of styrene-based resin is exemplified by high-impact polystyrene (HIPS), acrylonitrile-styrene copolymer (AS resin), acrylonitrile-butadiene-styrene copolymer (ABS resin), methyl methacrylate-acrylonitrile-butadiene-styrene copolymer (MABS resin), acrylonitrile-styrene-acrylic rubber copolymer (ASA resin), acrylonitrile-ethylene propylene-based rubber-styrene copolymer (AES resin), styrene-methyl methacrylate copolymer (MS resin), and styrene-maleic anhydride copolymer.

While the styrene-based resin may be any of those manufactured by methods such as emulsion polymerization, solution polymerization, bulk polymerization, suspension polymerization or bulk/suspension polymerization, now in this invention, the styrene-based polymer, or styrene-based random copolymer or block copolymer is preferably any of those manufactured by bulk polymerization, suspension polymerization or bulk/suspension polymerization, and styrene-based graft copolymer is preferably any of those manufactured by bulk polymerization, bulk/suspension polymerization or emulsion polymerization.

The acrylonitrile-butadiene-styrene copolymer (ABS resin) that is particularly preferably used in this invention is a mixture of thermoplastic graft copolymer obtained by grafting acrylonitrile and styrene to a butadiene rubber component, and acrylonitrile-styrene copolymer. The butadiene rubber component preferably accounts for 5 to 40% by weight, more preferably 10 to 35% by weight, and particularly 13 to 25% by weight, per 100% by weight of ABS resin component. The rubber particle size is preferably 0.1 to 5 µm, more preferably 0.2 to 3 µm, even more preferably 0.3 to 1.5 µm, and particularly 0.4 to 0.9 µm. The rubber particle size may show either unimodal distribution, or bi- or higher modal distribution.

The thermoplastic resin composition used in this invention may contain only a single species of styrene-based resin, or may contain two or more species.

The resin may also contain a resin component other than the polycarbonate resin and styrene-based resin. Note, however, that these component in this embodiment is preferably 5% by weight or less of the total resin component.

### Mode of Containing Polyamide Resin as Major Ingredient

A third embodiment of the thermoplastic resin of this invention is exemplified by a case where the thermoplastic resin contains a polyamide resin. When the polyamide resin is contained, the content thereof is preferably 80% by weight or more, more preferably 90% by weight or more, even more preferably 95% by weight or more, and particularly preferably 99% by weight or more. The upper limit of the content of polyamide resin, when contained in the thermoplastic resin, is 100% by weight or below. When the polyamide resin is contained, also other resin component may be contained. Note however that the content of the other resin is preferably 5% by weight or less of the total resin component.

### Polyamide Resin

The polyamide resin is a polymer having, as a repeating unit, acid amide obtained by ring-opening polymerization of lactam, polycondensation of aminocarboxylic acid, or polycondensation of diamine and dibasic acid, and is exemplified by polyamides 6, 11, 12, 46, 66, 610, 612, 61, 6/66, 6T/6I, 6/6T, 66/6T, 66/6T/6I, polyamide MX, polytrimethylhexamethylene terephthalamide, polybis(4-aminocyclohexyl)methane dodecamide, polybis(3-methyl-4-aminocyclohexyl)methane dodecamide, and polyundecamethylene hexahydroterephthalamide. Note that "I" represents isophthalic acid component, and "T" represents terephthalic acid component.

The polyamide resin used in this invention is properly selected, taking various characteristics of these polyamide resins and intended applications of the molded article into consideration.

Among the above-described polyamide resin, preferable is a semiaromatic polyamide having an aromatic ring in the source dicarboxylic acid component, or polyamide MX having an aromatic ring in the source diamine component, or polyamide resin obtained by mixing them, since it can easily yield a compound mixed with a relatively large amount of reinforcing filler such as glass fiber or carbon fiber.

The semiaromatic polyamide is specifically exemplified by 61, 6T/6I, 6/6T, 66/6T and 66/6T/6I.

Meanwhile, the polyamide MX resin obtained by polycondensation of xylylene diamine having an aromatic ring in the diamine component, with an α,ω-dibasic acid, is preferable since it can yield a resin composition having a particularly high strength. More preferable is a polyamide resin obtained by polycondensation of paraxylylene diamine and/or metaxylylene diamine, with an α,ω-straight chain aliphatic dibasic acid or aromatic dibasic acid having 6 to 12 carbon atoms; even more preferable is a polyamide MX resin obtained by using sebacic acid and/or adipic acid as the dicarboxylic acid component; and particularly preferable is polymetaxylylene adipamide.

Also mixtures of any of these polyamide resins having aromatic rings and aliphatic polyamide resin (e.g., polyamide 6, polyamide 66, etc.) are preferably used. As a result of mixing of such polyamide resin having aromatic rings, the thermoplastic resin will have an improved appearance and physical characteristics that have been achieved only limitedly by the aliphatic polyamide resin alone, when mixed with a large amount of filler. The ratio by weight of the polyamide resin having aromatic rings and the aliphatic polyamide resin, when mixed, is preferably 100:1 to 100:20.

### Mode of Containing Thermoplastic Polyester Resin as Major Ingredient

A fourth embodiment of the thermoplastic resin of this invention is exemplified by the case where the thermoplastic resin contains a thermoplastic polyester resin as the major ingredient. In the fourth embodiment, the ratio of the thermoplastic polyester resin, in the total resin component, is preferably 51 to 100% by weight, more preferably 80 to 100% by weight, and even more preferably 90 to 100% by weight.

### Thermoplastic Polyester Resin

Regarding the thermoplastic polyester resin, the description in paragraphs [0013] to [0016] of JP-A-2010-174223 may be referred to.

The polyester resin typically used is a mixture in which polybutylene terephthalate resin or polybutylene terephthalate resin accounts for 60% by weight or more, and preferably 80% by weight or more. A mixture of polybutylene terephthalate resin and polyethylene terephthalate resin, wherein the former accounts for 60% by weight or more, and even 80% by weight or more, is a preferred example of the polyester resin used in this invention. In such mixture of polybutylene terephthalate resin and polyethylene terephthalate resin, the content of polyethylene terephthalate resin is preferably 10 to 40% by weight, and more preferably 20 to 40% by weight.

As is commonly known, polybutylene terephthalate resin and polyethylene terephthalate resin have been mass-produced by allowing terephthalic acid or ester thereof to react with 1, 4-butanediol or ethylene glycol, and have been marketed. In this invention, such commercially available resins may be used. Although some of the commercially available resin contain copolymerizable components other than terephthalic acid component and 1,4-butanediol component or ethylene glycol component, this invention can also employ the resin containing a small amount of copolymerizable component whose content is typically 10% by weight or less, and preferably 5% by weight or less.

The polybutylene terephthalate resin has an intrinsic viscosity of typically 0.5 to 1.5 dl/g, and particularly 0.6 to 1.3 dl/g. Below 0.5 dl/g, it will be difficult to obtain the resin composition with a high mechanical strength. Meanwhile above 1.5 dl/g, the resin composition will occasionally degrade the fluidity, and formability as a consequence. The content of the terminal carboxy group is preferably 30 meq/g or less. The content of tetrahydrofuran derived from 1,4-butanediol is preferably 300 ppm or less.

Meanwhile, the polyethylene terephthalate resin preferably has an intrinsic viscosity of typically 0.4 to 1.0 dl/g, and particularly preferably 0.5 to 1.0 dl/g. Below 0.4 dl/g, the resin composition tends to degrade the mechanical characteristics, meanwhile above 1.0 dl/g, the resin composition tends to degrade the fluidity. Note that all intrinsic viscosities are measured in a phenol/tetrachloroethane (ratio by weight = 1/1) mixed solvent at 30°C.

The thermoplastic resin composition used in this invention may contain only a single species of the thermoplastic polyester resin, or may contain two or more species.

In this embodiment, other resin component other than the thermoplastic polyester resin may be contained. The content of such other resin is, however, preferably 5% by weight or less of the total resin component.

### Mode of Containing Polyacetal Resin as Major Ingredient

A fifth embodiment of the thermoplastic resin of this invention is exemplified by a case where the thermoplastic resin contains polyacetal resin. The content of the polyacetal resin, when contained, is preferably 80% by weight or more, up to the upper limit of 100% by weight. When the polyacetal resin is contained, also other resin component may be contained. The content of such other resin is, however, preferably 5% by weight or less of the total resin component.

### Polyacetal Resin

Regarding the polyacetal resin, the descriptions in paragraph [0011] of JP-A-2003-003041, and paragraphs [0018] to [0020] of JP-A-2003-220667 may be referred to.

Regarding the polyphenylene sulfide resin, the descriptions in paragraphs [0014] to [0016] of JP-A-H10-292114, paragraphs [0011] to [0013] of JP-A-H10-279800, and paragraphs [0011] to [0015] of JP-A-2009-30030 may be referred to.

In the thermoplastic resin composition used in this invention, the resin component preferably accounts for 40% by weight or more of the total composition, more preferably 50% by weight or more, and even more preferably 60% by weight or more. When a fiber (for example, glass filler, etc. described later) is mixed, the fiber and the resin component in total preferably accounts for 80% by weight or more.

### <<<Other Components>>>

The thermoplastic resin composition used in this invention may contain a fiber such as glass filler, or various additives, in addition to the thermoplastic resin.

The conventional thermoplastic resin composition containing the LDS additive has suffered from a problem that the LDS additive could sometimes damage the glass filler, and thereby degrade the mechanical strength inherent to the glass filler. In contrast, this invention can avoid such problem, since the LDS additive is added separately from the thermoplastic resin composition.

The conventional thermoplastic resin composition containing the LDS additive has also suffered from a problem that the plated layer could not properly be formed even mixed with the LDS additive, if a dye-pigment or flame-retardant composition was mixed. Meanwhile this invention can avoid the problem, since the LDS additive is added separately from the thermoplastic resin composition.

Note that the thermoplastic resin composition used in this invention is configured to contain substantially no LDS additive. The phrase of "to contain substantially no LDS additive" means that the amount of addition of the LDS additive is not enough to assist formation of the plated layer, and is typically 0.01 parts by weight or less per 100 parts by weight of the thermoplastic resin.

### Glass Filler

The thermoplastic resin composition used in this invention may contain a glass filler. The glass filler is exemplified by glass fiber, plate-like glass, glass bead and glass flake. Among them, glass fiber is preferable.

The glass filler may have any of glass compositions represented by A glass, C glass, E glass, and S glass, wherein E glass (non-alkali glass) is particularly preferable since it will not adversely affect the polycarbonate resin.

The glass fiber is an article showing a fiber-like appearance, and has a circular or polygonal cross-section when taken along a line normal to the longitudinal direction.

The glass fiber used for the thermoplastic resin composition used in this invention may be filament, or strand obtained by twisting a plurality of filaments.

Product form of the glass fiber may be any of "glass roving" which is a continuously wound filament or strand, "chopped strand" chopped into 1 to 10 mm long pieces, and "milled fiber" ground into 10 to 500 µm particles. Such glass fibers have been marketed by, and are readily available from, Asahi Fiber Glass Co., Ltd. under the trade names of "Glassron chopped strand" and "Glassron milled fiber". The glass fibers with different morphologies may be used in combination.

In this invention, also glass fibers having modified cross-sectional shape are preferable. The modified cross-sectional shape preferably has a flatness ratio of typically 1.5 to 10, preferably 2.5 to 10, more preferably 2.5 to 8, and particularly 2 . 5 to 5, where the flatness ratio is given by the ratio of long diameter and short diameter (D2/D1), denoting D2 as the long diameter of the cross-section normal to the longitudinal direction of fiber, and denoting D1 as the short diameter. Regarding such flattened glass, the descriptions in paragraphs [0065] to [0072] of JP-A-2011-195820 may be referred to, the content of which is incorporated into this specification.

Glass bead is a spherical article having an outer diameter of 10 to 100 µm, and is typically marketed by, and readily available from, Potters-Ballotini Co., Ltd. under the trade name of "EGB731". The glass flake is a flaky article having a thickness of 1 to 20 µm and a length of side of 0.05 to 1 mm, and is typically marketed by, and readily available from, Nippon Sheet Glass Co., Ltd. under the trade name of "Fleka".

The amount of mixing of the glass filler into the thermoplastic resin composition used in this invention, when mixed, is preferably 1 part by weight or more, more preferably 10 parts by weight or more, and even more preferably 15 parts by weight or more, per 100 parts by weight of the resin component. And depending on aapplications, it may be 30 parts by weight or more, may further be 40 parts by weight or more. Meanwhile, the upper limit value is preferably 200 parts by weight or below, and more preferably 150 parts by weight or below. Depending on applications, the amount of mixing may be 60 parts by weight or less, may further be 50 parts by weight or less, and may particularly be 20 parts by weight or less.

The thermoplastic resin composition used in this invention may contain only a single species of glass filler, or two or more species. When two or more species are contained, the total content falls within the above-described ranges. By mixing the glass filler, the mechanical strength may be improved, and also the platability tends to be improved.

### Sizing Agent

The glass filler mixed to the thermoplastic resin composition used in this invention is preferably coated by a sizing agent. Types of the sizing agent is not specifically limited. Only a single species of the sizing agent may be used, or two or more species may be used in combination. The sizing agent is exemplified by polyolefinic resin, silicone resin, epoxy resin and urethane resin.

The amount of mixing of the sizing agent in the thermoplastic resin composition used in this invention is preferably 0.1 to 5.0% by weight of the glass filler, and is more preferably 0.2 to 2.0% by weight. The thermoplastic resin composition used in this invention may contain only a single species of the sizing agent, or may contain two or more species. When two or more species are contained, the total content falls in the above-described ranges.

### Titanium Oxide

The thermoplastic resin composition may contain titanium oxide. The titanium oxide is exemplified by titanium monooxide (TiO), dititanium trioxide (Ti₂O₃), and titanium dioxide (TiO₂). While any of them may be used, titanium dioxide is preferable. The titanium oxide having the rutile crystal structure is preferably used.

The average primary particle size of the titanium oxide is preferably 1 µm or smaller, more preferably in the range from 0.001 to 0.5 µm, and even more preferably in the range from 0.002 to 0.1 µm. By controlling the average particle size of the titanium oxide within the above-described ranges, and by controlling the amount of mixing within the above-described ranges, the obtainable resin molded article will have an increased whiteness and increased surface reflectivity.

The titanium oxide used here may have a treated surface. Surface treatment agent is preferably an inorganic and/or organic materials. Specific examples include metal oxides such as silica, alumina and zinc oxide; and organic materials such as silane coupling agent, titanium coupling agent, organic acid, polyol, and silicone.

The titanium oxide used here may be commercially available one. Still alternatively, the titanium oxide may be properly ground from a bulk or product having a larger average particle size, optionally classified by sieving so as to adjust the average particle size within the above-described ranges.

The amount of mixing of the titanium oxide in the thermoplastic resin composition, when mixed, is preferably 0.1 parts by weight or more per 100 parts by weight of the resin component, more preferably 1 part by weight or more, and even more preferably 3 parts by weight or more. The upper limit is preferably 80 parts by weight or below, more preferably 20 parts by weight or below, even more preferably 12 parts by weight or below, and yet more preferably 8 parts by weight or below.

The thermoplastic resin composition may contain only a single species of titanium oxide, or two or more species. When two or more species are used, the total content falls within the above-described ranges.

### Elastomer

The thermoplastic resin composition used in this invention may contain an elastomer. By containing the elastomer, the obtainable resin molded article will have an improved impact resistance. The elastomer used in this invention is exemplified by styrene-butadiene-based triblock copolymers called methyl methacrylate-butadiene-styrene copolymer (MBS resin), SBS or SEBS, and hydrogenated products thereof; styrene-isoprene-based triblock copolymers called SPS or SEPS, and hydrogenated products thereof; olefinic thermoplastic elastomer called TPO; polyester-based elastomer; siloxane-based rubber; and acrylate-based rubber. As the elastomer, those described in paragraphs [0075] to [0088] of JP-A-2012-251061, and those described in paragraphs [0101] to [0107] of JP-A-2012-177047 may be used, the contents of which are incorporated into the specification of the present application.

The elastomer used in this invention preferably has the content of acrylonitrile/butadiene/styrene copolymer of less than 10% by weight of the total, more preferably 5% by weight or less, and even more preferably 3% by weight or less.

The elastomer used in this invention is preferably a graft copolymer composed of a rubber component grafted with a monomer component copolymerizable therewith. The graft copolymer may be manufactured by any of the methods including bulk polymerization, solution polymerization, suspension polymerization, and emulsion polymerization. The style of copolymerization may either be single-stage grafting or multi-stage grafting.

The rubber component preferably has a glass transition temperature of typically 0°C or lower, preferably -20°C or lower, and more preferably -30°C or lower. Specific examples of the rubber component include polybutadiene rubber; polyisoprene rubber; polyalkyl acrylate rubbers such as polybutyl acrylate, poly(2-ethylhexyl acrylate), and butyl acrylate/2-ethylhexyl acrylate copolymer; silicone rubbers such as polyorganosiloxane rubber; butadiene-acryl composite rubber; IPN (Interpenetrating Polymer Network)-type composite rubber composed of polyorganosiloxane rubber and polyalkyl acrylate rubber; styrene-butadiene rubber; ethylene-α-olefinic rubbers such as ethylene-propylene rubber, ethylene-butene rubber and ethylene-octene rubber; ethylene-acrylic rubber; and fluorine-containing rubber. They may be used independently, or in a mixed form of two or more species. Among them, in view of mechanical characteristics and appearance of the surface, preferable are polybutadiene rubber, polyalkyl acrylate rubber, polyorganosiloxane rubber, IPN-type composite rubber composed of polyorganosiloxane rubber and polyalkyl acrylate rubber, and styrene-butadiene rubber.

Specific examples of the monomer component possibly polymerized by grafting with the rubber component include aromatic vinyl compound; cyanated vinyl compound; (meth)acrylate ester compound; (meth)acrylic acid compound; epoxy group-containing (meth)acrylate ester compound such as glycidyl (meth)acrylate; maleimide compounds such as maleimide, N-methylmaleimide and N-phenylmaleimide; and α,β-unsaturated carboxylic acid compound such as maleic acid, phthalic acid and itaconic acid, and anhydrides thereof (e.g., maleic anhydride, etc.). These monomer component may be used independently, or in a mixed form of two or more species. Among them, in view of mechanical characteristics and appearance of the surface, preferable are aromatic vinyl compound, cyanated vinyl compound, (meth)acrylate ester compound and (meth)acrylic acid compound, and more preferable is (meth)acrylate ester compound. Specific examples of the (meth)acrylate ester compound include methyl(meth)acrylate, ethyl(meth)acrylate, butyl(meth)acrylate, cyclohexyl(meth)acrylate, and octyl(meth)acrylate.

The graft copolymer copolymerized with the rubber component is preferably a core/shell-type graft copolymer, in view of impact resistance and appearance of the surface. Among them, particularly preferable is a core/shell-type graft copolymer having a core layer composed of at least one species of rubber component selected from polybutadiene-containing rubber, polybutyl acrylate-containing rubber, polyorganosiloxane rubber, and IPN-type composite rubber composed of polyorganosiloxane rubber and polyalkyl acrylate rubber; and a shell layer formed therearound by copolymerizing a (meth)acrylate ester. The core/shell-type graft copolymer preferably contains 40% by weight or more, and more preferably 60% by weight or more of rubber component. The copolymer also preferably contains 10% by weight or more of (meth)acrylic acid. Note that the core/shell structure in this invention need not always have a core layer and a shell layer clearly separable from each other, but is broadly construed to include compounds obtained by grafting the rubber component around the core portion.

Preferable examples of the core/shell-type graft copolymer include methyl methacrylate-butadiene-styrene copolymer (MBS), methyl methacrylate-acrylonitrile-butadiene-styrene copolymer (MABS), methyl methacrylate-butadiene copolymer (MB), methyl methacrylate-acrylic rubber copolymer (MA), methyl methacrylate-acrylic rubber-styrene copolymer (MAS), methyl methacrylate-acrylate-butadiene rubber copolymer, methyl methacrylate-acrylate-butadiene rubber-styrene copolymer, methyl methacrylate-(acrylate-silicone IPN rubber) copolymer, and silicone-acrylate composite rubber containing polyorganosiloxane and polyalkyl(meth)acrylate, wherein silicone-acrylate composite rubber containing polyorganosiloxane and polyalkyl(meth) acrylate, and methyl methacrylate-butadiene copolymer (MB) are particularly preferable. Such rubbery polymer may be used independently, or in a mixed form of two or more species.

Such elastomer is exemplified by "Paraloid (registered trademark, the same shall apply hereinafter) EXL2602", "Paraloid EXL2603", "Paraloid EXL2655", "Paraloid EXL2311", "Paraloid EXL2313", "Paraloid EXL2315", "Paraloid KM330", "Paraloid KM336P" and "Paraloid KCZ201" from Rohm and Haas Japan K.K.; "Metablen (registered trademark, the same shall apply hereinafter) C-223A", "Metablen E-901", "Metablen S-2001", "Metablen SRK-200" and "Metablen S-2030" from Mitsubishi Rayon Co., Ltd.; "Kane Ace (registered trademark, the same shall apply hereinafter) M-511", "Kane Ace M-600", "Kane Ace M-400", "Kane Ace M-580", "Kane Ace M-711" and "Kane Ace MR-01" from Kaneka Corporation; and "UBESTA XPA" from Ube Industries, Ltd.

The amount of mixing of the elastomer, when mixed, is preferably 1 to 20 parts by weight, more preferably 1 to 15 parts by weight, and even more preferably 2 to 10 parts by weight, per 100 parts by weight of the resin component.

The thermoplastic resin composition used in this invention may contain only a single species of the elastomer, or two or more species. When two or more species are contained, the total content falls within the above-described ranges.

### Flame-retardant Composition

The thermoplastic resin composition used in this invention may contain a flame-retardant composition. The flame-retardant composition may be composed of a flame-retardant only, or may be a combination of a flame-retardant and a flame-retardant auxiliary. Each of the flame-retardant and the flame-retardant auxiliary may be of a single species, or of two or more species.

The flame-retardant and/or flame-retardant auxiliary contained in the flame-retardant composition in this invention is exemplified by halogen-containing flame-retardant, organometallic salt-based flame-retardant, phosphorus-containing flame-retardant, silicone-based flame-retardant, and antimony-containing flame-retardant or flame-retardant auxiliary. When polyamide resin or polyester resin is used as the thermoplastic resin, it is preferable to mix the halogen-containing flame-retardant or phosphorus-containing flame-retardant. Meanwhile when polycarbonate resin is used as the thermoplastic resin, it is preferable to use phosphorus-containing flame-retardant or organometallic salt-based flame-retardant.

Preferred specific examples of the halogen-containing flame-retardant include bromine-containing flame-retardants, which are exemplified by brominated polycarbonate, brominated epoxy resin, brominated phenoxy resin, brominated polyphenylene ether resin, brominated polystyrene resin, brominated bisphenol A, glycidyl brominated bisphenol A, pentabromobenzyl polyacrylate, and brominated imide. Among them, brominated polycarbonate, brominated polystyrene resin, glycidyl brominated bisphenol A, and pentabromobenzyl polyacrylate are more preferable in view of their tendency to suppress the impact resistance from degrading.

The phosphorus-containing flame-retardant is exemplified by metal ethylphosphinate salt, metal diethylphosphinate salt, melamine polyphosphate, condensed phosphate ester, and phosphazene compound. Among them, condensed phosphate ester, and phosphazene are preferable. In order to suppress outgas or mold deposit during molding, or to suppress bleed-out of the flame-retardant, it is also preferable to mix a thermoplastic resin that is highly compatible with the phosphorus-containing flame-retardant. This sort of thermoplastic resin is preferably polyphenylene ether resin, polycarbonate resin, or styrene-based resin.

The condensed phosphoric ester is preferably a compound represented by formula (10) below.
Formula (10) 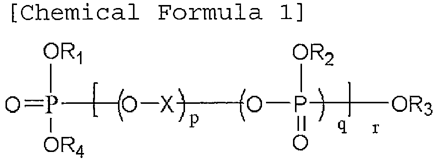 (In the formula, each of R₁, R₂, R₃ and R₄ independently represents a hydrogen atom or organic group, but excluding a case where all of R₁, R₂, R₃ and R₄ represent hydrogen atoms . X represents a divalent organic group, p represents 0 or 1, q represents an integer of 1 or larger, and r represents an integer of 0 or 1 or larger.)

In formula (10), the organic group is exemplified by a substituted, or non-substituted, alkyl group, cycloalkyl group, and aryl group. The substituent is exemplified by alkyl group, alkoxy group, alkylthio group, aryl group, aryloxy group, arylthio group, halogen atom, and halogenated aryl group. Also acceptable are groups given by combining these substituents, or groups given by combining these substituents through oxygen atom, sulfur atom, nitrogen atom and so forth. The divalent organic group means divalent or higher valent groups that remain after eliminating one carbon atom from the above-described organic groups, and are exemplified by alkylene group, phenylene group, substituted phenylene group, and polynuclear phenylene groups such as those derived from bisphenols.

Specific examples of the condensed phosphoric ester represented by formula (10) include a variety of compounds such as trimethyl phosphate, triethyl phosphate, tributhyl phosphate, trioctyl phosphate, triphenyl phosphate, tricresyl phosphate, tricresyl phenyl phosphate, octyl diphenyl phosphate, diisopropyl phenyl phosphate, tris(chloroethyl) phosphate, tris(dichloropropyl) phosphate, tris(chloropropyl) phosphate, bis(2,3-dibromopropyl) phosphate, bis(2,3-dibromopropyl)-2,3-dichloro phosphate, bis(chloropropyl)monooctyl phosphate, bisphenol A tetraphenyl phosphate, bisphenol A tetracresyl diphosphate, bisphenol A tetraxylyl diphosphate, hydroquinone tetraphenyl diphosphate, hydroquinone tetracresyl phosphate, and hidroquinone tetraxylyl diphosphate.

Commercial products are marketed under the trade names "CR733S" (resorcinol bis(diphenyl phosphate)), "CR741"(bisphenol A bis(diphenyl phosphate)) and "PX-200" (resorcinol bis(dixylylenyl phosphate)) from Daihachi Chemical Industry Co., Ltd. ; and "ADK STAB FP-700" (phenol condensate of 2,2-bis(*p*-hydroxyphenyl)propane/ trichlorophosphine oxide polycondensate (degree of polymerization=1 to 3) from ADEKA Corporation, which are readily available.

The phosphazene compound is an organic compound having in the molecule thereof a -P=N- bond, and is preferably at least one compound selected from the group consisting of cyclic phosphazene compound represented by formula (1) below; chain-like phosphazene compound represented by formula (2) below; and crosslinked phosphazene compounds obtained by crosslinking, by a crosslinking group, at least one phosphazene compound selected from the group consisting of the compounds represented by formula (1) and formula (2) below.

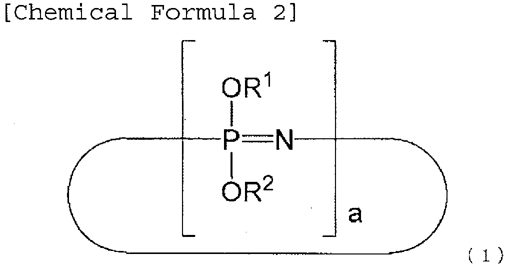

In formula (1), "a" represents an integer of 3 to 25; and, each of R¹ and R², which may be same or different, represents an alkyl group, cycloalkyl group, alkenyl group, alkynyl group, aryloxy group, amino group, hydroxy group, aryl group or alkylaryl group.

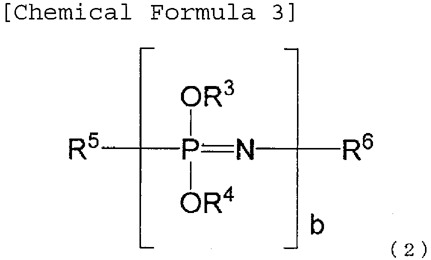

In formula (2), "b" represents an integer of 3 to 10,000, and, each of R³ and R⁴, which may be same or different, represents an alkyl group, cycloalkyl group, alkenyl group, alkynyl group, aryloxy group, amino group, hydroxy group, aryl group or alkylaryl group.

R⁵ represents at least one selected from the group consisting of -N=P(OR³)₃ group, -N=P(OR⁴)₃ group, -N=P(O)OR³ group, and -N=P(O)OR⁴ group; and, R⁶ represents at least one selected from the group consisting of -P(OR³)₄ group, -P(OR⁴)₄ group, -P(O)(OR³)₂ group, and -P(O)(OR⁴)₂ group.

In formula (1) and formula (2), the alkyl group is exemplified by methyl group, ethyl group, propyl group, isopropyl group, butyl group, t-butyl group, pentyl group, hexyl group, octyl group, decyl group, and dodecyl group; wherein preferable are alkyl groups having 1 to 6 carbon atoms, which include methyl group, ethyl group, propyl group, isopropyl group, butyl group, t-butyl group, pentyl group, and hexyl group. Alkyl groups having 1 to 4 carbon atoms, such as methyl group, ethyl group, and propyl group are particularly preferable.

The cycloalkyl group is exemplified by cycloalkyl groups having 5 to 14 carbon atoms, such as cyclopentyl group and cyclohexyl group; and is preferably exemplified by cycloalkyl groups having 5 to 8 carbon atoms.

The alkenyl group is exemplified by alkenyl group having 2 to 8 carbon atoms, such as vinyl group and allyl group. The cycloalkenyl group is exemplified by cycloalkenyl groups having 5 to 12 carbon atoms, such as cyclopentyl group and cyclohexyl group.

The alkynyl group is exemplified by alkynyl groups having 2 to 8 carbon atoms, such as ethynyl group and propynyl group; and also by alkynyl groups substituted by an aryl group such as ethynylbenzene group.

The aryl group is exemplified by aryl groups having 6 to 20 carbon atoms, such as phenyl group, methylphenyl (or, tolyl) group, dimethylphenyl (or, xylyl) group, trimethylphenyl group and naphthyl group; wherein aryl groups having 6 to 10 carbon atoms are preferable, and phenyl group is particularly preferable.

The alkylaryl group is exemplified by aralkyl groups having 6 to 20 carbon atoms, such as benzyl group, phenetyl group, and phenylpropyl group; wherein aralkyl groups having 7 to 10 carbon atoms are preferable, and benzyl group is particularly preferable.

Among them, those having aryl groups or arylalkyl groups for R¹ and R² in formula (1), and for R³ and R⁴ in formula (2), are preferable. By using such aromatic phosphazenes, it now becomes possible to effectively enhance the thermal stability of the thermoplastic resin composition. From this point of view, each of R¹, R², R³ and R⁴ more preferably represents an aryl group, and particularly phenyl group.

The cyclic and/or chain-like phosphazene compounds represented by formula (1) and formula (2) are exemplified by (poly)tolyloxyphosphazenes such as phenoxyphosphazene, *o*-tolyloxyphosphazene, *m*-tolyloxyphosphazene, and *p*-tolyloxyphosphazene; (poly)xylyloxyphosphazenes such as *o*,*m*-xylyloxyphosphazene, *o*,*p*-xylyloxyphosphazene, and *m*,*p*-xylyloxyphosphazene; (poly)phenoxytolyloxyphosphazenes such as *o*,*m*,*p*-trimethyl phenyloxyphosphazene, phenoxy *o*-tolyloxyphosphazene, phenoxy *m*-tolyloxyphosphazene, and phenoxy *p*-tolyloxyphosphazene; (poly)phenoxytolyloxyxylyloxyphosphazenes such as phenoxy *o*,*m*-xylyloxyphosphazene, phenoxy *o*,*p*-xylyloxyphosphazene, and phenoxy *m*,*p*-xylyloxyphosphazene; and phenoxy *o*,*m*,*p*-trimethylphenyloxyphosphazene. Cyclic and/or chain-like phenoxyphosphazenes are prefearble.

As the cyclic phosphazene compound represented by formula (1), particularly preferable is cyclic phenoxyphosphazene having phenyl groups for R¹ and R². Such cyclic phenoxyphosphazene compound is exemplified by phenoxycyclotriphosphazene, octaphenoxycyclotetraphosphazene, and decaphenoxycyclopentaphosphazene, which are obtained typically by allowing ammonium chloride and phosphorus pentachloride to react at 120 to 130°C to obtain a mixture that contains cyclic and straight chain-like chlorophosphazenes; extracting therefrom the cyclic chlorophosphazenes such as hexachlorocyclotriphosphazene, octachlorocyclotetraphosphazene, and decachlorocyclopentaphosphazene; and then substituting chlorine atoms with phenoxy groups. The cyclic phenoxyphosphazene compound is preferably a compound represented by formula (1) whose "a" represents an integer of 3 to 8, and may even be a mixture of compounds having different values for "a".

The value "a" is preferably averaged to be 3 to 5, which is more preferably 3 to 4. In a preferred mixture, the compound with a=3 accounts for 50% by weight or more, the compound with a=4 accounts for 10 to 40% by weight, and the compound with a=5 or larger totals 30% by weight or less.

The chain-like phosphazene compound represented by formula (2) is preferably a chain-like phenoxyphosphazene whose R³ and R⁴ represent phenyl groups. Such chain-like phenoxyphosphazene compound is exemplified by a compound which is obtained, for example, by subjecting hexachlorocyclotriphosphazene obtainable by the above-described method to ring-opening polymerization at 220 to 250°C, and then by substituting the chlorine atoms of the thus obtained straight chain dichlorophosphazene, having a degree of polymerization of 3 to 10,000, with phenoxy groups. The straight chain phenoxyphosphazene compound preferably has a value of "b" in formula (2) of 3 to 1,000, which is more preferably 3 to 100, and even more preferably 3 to 25.

The crosslinked phosphazene compound is exemplified by compounds having a crosslinked structure of 4,4'-diphenylene group, which are more specifically compounds having a crosslinked structure of 4,4'-sulfonyldiphenylene (*i.e*., bisphenol S residue); compounds having a crosslinked structure of 2,2-(4,4'-diphenylene)isopropylidene group; compounds having a crosslinked structure of 4,4'-oxydiphenylene group; and compounds having a crosslinked structure of 4,4'-thiodiphenylene group.

From the viewpoint of flame retardance, preferred examples of the crosslinked phosphazene compound include crosslinked phenoxyphosphazene compound obtained by crosslinking the cyclic phenoxyphosphazene compound, whose R¹, R² in formula (1) represent phenyl groups, with the above-described crosslinking group; and crosslinked phenoxyphosphazene compound obtained by crosslinking the chain-like phenoxyphosphazene compound, whose R³, R⁴ in formula (2) represent phenyl groups, with the above-described crosslinking group. The crosslinked phenoxyphosphazene compounds obtained by crosslinking the cyclic phenoxyphosphazene compound with the above-described crosslinking group is more preferable.

The content of the phenylene group in the crosslinked phenoxyphosphazene compound is typically 50 to 99.9%, and preferably 70 to 90%, based on the total number of phenyl groups and phenylene groups in the cyclic phosphazene compound represented by formula (1) and/or the chain-like phenoxyphosphazene compound represented by formula (2). It is particularly preferable that the crosslinked phenoxyphosphazene compound has no free hydroxy group in the molecule thereof.

From the viewpoints of flame retardance and mechanical characteristics of the thermoplastic resin composition, the phosphazene compound in this invention is preferably at least one selected from the group consisting of the cyclic phenoxyphosphazene compound represented by formula (1), and, the crosslinked phenoxyphosphazene compound obtained by crosslinking the cyclic phenoxyphosphazene compound represented by formula (1) with a crosslinking group.

The phosphazene compound is commercially available, for example, as FP-110, from Fushimi Pharmaceutical Co., Ltd.

The organometallic salt-based flame-retardant is preferably organic alkali metal salt compound or organic alkali earth metal salt compound (alkali metal and alkali earth metal will be referred to as "alkali (earth) metal", hereinafter). The organometallic salt-based flame-retardant is exemplified by metal sulfonate salt, metal carboxylate salt, metal borate salt, and metal phosphate salt. In view of thermal stability when added to the aromatic polycarbonate resin, preferable is metal sulfonate salt, and particularly preferable is metal perfluoroalkanesulfonate salt.

The metal sulfone salt is exemplified by lithium (Li) sulfonate salt, sodium (Na) sulfonate salt, potassium (K) sulfonate salt, rubidium (Rb) sulfonate salt, cesium (Cs) sulfonate salt, magnesium (Mg) sulfonate salt, calcium (Ca) sulfonate salt, strontium (Sr) sulfonate salt, and barium (Ba) sulfonate salt. Among them, sodium (Na) sulfonate salt and potassium (K) sulfonate salt are particularly preferable.

Such sulfonic acid metal salt is exemplified by alkali (earth) metal salt compound of aromatic sulfonic acid such as dipotassium diphenylsulfone-3,3'-disulfonate, potassium diphenylsulfone-3-sulfonate, sodium benzenesulfonate, sodium (poly)styrenesulfonate, sodium paratoluenesulfonate, sodium (branched) dodecylbenzenesulfonate, sodium trichlorobenzenesulfonate, potassium benzenesulfonate, potassium styrenesulfonate, potassium (poly)styrenesulfonate, potassium paratoluenesulfonate, potassium (branched) dodecylbenzenesulfonate, potassium trichlorobenzenesulfonate, cesium benzenesulfonate, cesium (poly)styrenesulfonate, cesium paratoluenesulfonate, cesium (branched) dodecylbenzenesulfonate, and cesium trichlorobenzenesulfonate; and metal salt of perfluoroalkanesulfonic acid (alkane preferably has 2 to 6 carbon atoms) such as alkali metal salt of perfluoroalkanesulfonate such as potassium perfluorobutanesulfonate. Among them, dipotassium diphenylsulfone-3,3'-disulfonate, potassium diphenylsulfone-3-sulfonate, sodium paratoluenesulfonate, potassium paratoluenesulfonate, and potassium perfluorobutanesulfonate are preferable in view of a good balance between transparency and flame retardance. Metal salt of perfluoroalkanesulfonic acid such as potassium perfluorobutanesulfonate is particularly preferable.

Antimony-containing flame-retardant or flame-retardant auxiliary is a compound that contains antimony and contributes to flame retardance. Specific examples include antimony oxides such as antimony trioxide (Sb₂O₃), antimony tetraoxide and antimony pentaoxide (Sb₂O₅); sodium antimonate; and antimony phosphate. Among them, antimony oxides are preferable by virtue of their good moist heat resistance. Antimony trioxide is more preferably used.

The flame-retardant auxiliary, other than those described above, is exemplified by copper oxide, magnesium oxide, zinc oxide, molybdenum oxide, zirconium oxide, tin oxide, iron oxide, titanium oxide, aluminum oxide, and zinc borate. Among them, zinc borate is preferable in view of its good flame retardance.

The ratio of content of flame-retardant auxiliary is preferably 0.3 to 1.1 (ratio by weight), and more preferably 0.4 to 1.0, relative to the flame-retardant.

In particular, as the flame-retardant composition used in this invention, exemplified is a combination of a halogen-containing flame-retardant and an antimony-containing flame-retardant or flame-retardant auxiliary. The present inventors have found from our investigations that the resin composition containing the LDS additive, when mixed with the antimony-containing flame-retardant or flame-retardant auxiliary, sometimes failed in properly forming the plated layer. The antimony-containing flame-retardant or flame-retardant auxiliary is, however, useful as a flame-retardant for thermoplastic resin, so that there is a need for properly form the plated layer on the thermoplastic resin molded article that contains the antimony-containing flame-retardant or flame-retardant auxiliary. This invention now succeeded in properly forming the plated layer on the surface of the resin molded article, by using the LDS layer-forming composition separately from the thermoplastic resin composition even if it contains the antimony-containing flame-retardant or flame-retardant auxiliary.

The content of antimony-containing flame-retardant or flame-retardant auxiliary, when contained, is preferably 0.1 to 25 parts by weight, and more preferably 1 to 15 parts by weight, per 100 parts by weight of the thermoplastic resin.

When the antimony-containing flame-retardant or flame-retardant auxiliary is used, the ratio of content is preferably 1:0.3 to 1.1 (ratio by weight), and more preferably 1:0.4 to 1.0.

The amount of mixing of the flame-retardant composition, per 100 parts by weight of the resin component, is preferably 0.01 parts by weight to 40 parts by weight, more preferably 1 to 40 parts by weight, even more preferably 5 to 50 parts by weight, particularly 6 to 35 parts by weight, and more particularly preferably 7 to 30 parts by weight. Addition of the flame-retardant composition to the thermoplastic resin composition already containing the LDS additive has sometimes resulted in degradation of the platability (appearance of plating). In contrast, this invention can properly form the plated layer also on the surface of the resin molded article preliminarily mixed with the flame-retardant composition, since the thermoplastic resin composition and the LDS layer-forming composition are used separately.

In particular for the case of using an organometallic salt-based flame-retardant as the flame-retardant composition, the content thereof is preferably 0.01 to 1 part by weight per 100 parts by weight of the resin component.

### Antidripping Agent

The thermoplastic resin composition used in this invention may contain an antidripping agent. The antidripping agent is preferably polytetrafluoroethylene (PTFE), which has a fibril-forming ability, easily dispersible into the resin composition, and shows tendency of binding resins to form a fibrous material. Specific examples of polytetrafluoroethylene include "Teflon (registered trademark) 6J" or "Teflon (registered trademark) 30J" commercially available from Du Pont-Mitsui Fluorochemicals Company, Ltd.; "Polyflon" commercially available from Daikin Industries, Ltd.; and "Fluon" commercially available from Asahi Glass Co., Ltd.

The ratio of content of the antidripping agent is preferably 0.01 to 20 parts by weight per 100 parts by weight of the thermoplastic resin. By controlling the content of the antidripping agent to 0.1 parts by weight or above, the flame retardance tends to be improved, meanwhile by controlling the content to 20 parts by weight or below, the appearance tends to improve. The ratio of content of the antidripping agent is more preferably 0.05 to 10 parts by weight, and even more preferably 0.08 to 5 parts by weight, per 100 parts by weight of the thermoplastic resin.

### Silicate Mineral

The thermoplastic resin composition used in this invention may contain a silicate mineral. By mixing the silicate mineral in this invention, the notched Charpy impact strength may be improved. The silicate mineral is not specifically limited so long as it contains silicon (Si) and oxygen (O), and is preferably talc and/or mica, and more preferably talc.

The silicate mineral used in this invention is preferably in a particle form, preferably having an average particle size of 1 to 30 µm, and more preferably 2 to 20 µm.

The silicate mineral used in this invention may be a silicate mineral whose surface is treated with at least one compound selected from polyorganohydrogen siloxanes and organopolysiloxanes, wherein the surface is preferably not treated.

The amount of mixing of the silicate mineral, when mixed, is preferably 0.1 parts by weight or more per 100 parts by weight of the resin component, more preferably 1 part by weight or more, even more preferably 3 parts by weight or more, particularly preferably 3.5 parts by weight or more, and even may be 4.0 parts by weight or more. The upper limit value is preferably 30 parts by weight or below, more preferably 20 parts by weight or below, particularly prefarably 10 parts by weight or below, or alternatively be 9 parts by weight or below, and even may be 8 parts by weight or below.

The thermoplastic resin composition used in this invention may contain only a single species of silicate mineral, or may contain two or more species. When two or more species are contained, the total content is controlled within the above-described ranges. When the silicate mineral has a treated surface, the amount including the surface treatment agent preferably falls within the above-described ranges.

### Dye-Pigment

The thermoplastic resin composition used in this invention may contain a dye-pigment other than titanium oxide. In this invention, addition of the dye-pigment can color the resin molded article. The dye-pigment is preferably a pigment.

The dye-pigment is exemplified by white pigment containing ZnS or ZnO, and black dye-pigment (in particular, black pigment) such as carbon black. In particular, by mixing the black dye-pigment, the black dye-pigment absorbs heat of laser irradiation to thereby melt the surface of the resin molded article composed of the thermoplastic resin composition, and thereby the adhesiveness with the LDS additive may be improved.

The dye-pigment is also exemplified by phthalocyanine-based dye-pigment such as copper phthalocyanine blue, and copper phthalocyanine green; azo-based dye-pigment such as nickel azo yellow; condensed polycyclic dye-pigment such as thioindigo-based, perinone-based, perylene-based, quinacridone-based, dioxazine-based, isoindolinone-based, and quinophthalone-based ones; and anthraquinone-based, heterocyclic-based and methyl dye-pigment.

Addition of the dye-pigment to the thermoplastic resin composition preliminarily added with the LDS additive has sometimes degraded the platability. In contrast according to this invention, the plated layer may properly be formed also on the surface of the resin molded article composed of the thermoplastic resin composition containing the dye-pigment, since the thermoplastic resin composition and the LDS layer-forming composition are used separately. In particular, this invention is effective, since the platability has been likely to be damaged when white pigment was used.

When the thermoplastic resin composition used in this invention contains a pigment, the amount of addition of dye-pigment is preferably 0.01 to 10 parts by weight per 100 parts by weight of resin component, and more preferably 0.05 to 5 parts by weight.

The thermoplastic resin composition used in this invention may contain only a single species of dye-pigment, or two or more species. When two or more species are contained, the total content preferably falls within the above-described ranges.

### Phosphorus-Containing Stabilizer

The thermoplastic resin composition used in this invention preferably contains a phosphorus-containing stabilizer. The phosphorus-containing stabilizer is preferably phosphate ester and phosphite ester.

The phosphate ester is preferably a compound represented by Formula (3) below:
Formula (3)

O=P(OH)ₘ(OR)3-ₘ··· (3)

(in Formula (3), R represents an alkyl group or aryl group, where individual (R)s may be same or different. m represents an integer of 0 to 2.)

R preferably represents an alkyl group having 1 to 30 carbon atoms, or an aryl group having 6 to 30 carbon atoms, and more preferably represents an alkyl group having 2 to 25 carbon atoms, phenyl group, nonylphenyl group, stearylphenyl group, 2,4-di-tert-butylphenyl group, 2,4-di-tert-butylmethylphenyl group, or tolyl group.

The phosphate ester is exemplified by trimethyl phosphate, triethyl phosphate, tributyl phosphate, trioctyl phosphate, triphenyl phosphate, tricresyl phosphate, tris(nonylphenyl) phosphate, 2-ethylphenyldiphenyl phosphate, and tetrakis(2,4-di-tert-butylphenyl)-4,4-diphenylene phosphonite.

The phosphite ester is preferably a compound represented by Formula (4) below: 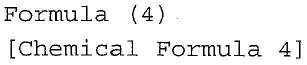 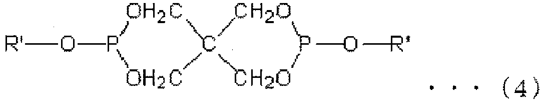 (in Formula (4), R' represents an alkyl group or aryl group, where the individual (R')s may be same or different.)

R' preferably represents an alkyl group having 1 to 25 carbon atoms, or an aryl group having 6 to 12 carbon atoms. When R' represents an alkyl group, it is preferably an alkyl group having 1 to 30 carbon atoms. When R' represents an aryl group, it is preferably an aryl group having 6 to 30 carbon atoms.

The phosphite ester is exemplified by triesters, diesters and monoesters of phosphonic acid such as triphenyl phosphite, trisnonylphenyl phosphite, tris(2,4-di-tert-butylphenyl) phosphite, trinonyl phosphite, tridecyl phosphite, trioctyl phosphite, trioctadecyl phosphite, distearylpentaerythritol diphosphite, tricyclohexyl phosphite, monobutyldiphenyl phosphite, monooctyldiphenyl phosphite, bis(2,4-di-tert-butylphenyl)pentaerythritol phosphite, bis(2,6-di-tert-butyl-4-methylphenyl)pentaerythritol phosphite, and 2,2-methylenebis(4,6-di-tert-butylphenyl)octyl phosphite.

The amount of mixing of the phosphorus-containing stabilizer, when contained in the thermoplastic resin composition used in this invention, is preferably 0.01 to 5 parts by weight per 100 parts by weight of the resin component, and more preferably 0.02 to 2 parts by weight.

The thermoplastic resin composition used in this invention may contain only a single species of phosphorus-containing stabilizer, or two or more species. When two or more species are contained, the total content falls within the above-described ranges.

### Antioxidant

The thermoplastic resin composition used in this invention may contain an antioxidant. The antioxidant is preferably a phenolic antioxidant, and more specifically exemplified by 2,6-di-t-butyl-4-methylphenol, n-octadecyl-3-(3,5-di-t-butyl-4-hydroxyphenyl) propionate, tetrakis[methylene-3-(3,5-di-t-butyl-4-hydroxyphenyl) propionate] methane, tris(3,5-di-t-butyl-4-hydroxybenzyl) isocyanurate, 4,4'-butylidenebis(3-methyl-6-t-butylphenol), triethylene glycol-bis[3-(3-t-butyl-hydroxy-5-methylphenyl) propionate], 3,9-bis{2-[3-(3-t-butyl-4-hydroxy-5-methylphenyl)propionyloxy]-1,1-dimethylethyl}-2,4,8,10-tetraoxaspiro[5.5]undecane, N,N'-hexamethylenebis[3-(3,5-di-t-butyl-4(-hydroxyphenyl)propio namide), and pentaerythritol tetrakis[3-(3,5-di-tert-butyl-4-hydroxyphenyl) propionate]. Among them, preferable are octadecyl-3-(3,5-di-tert-butyl-4-hydroxyphenyl) propionate, N,N'-hexamethylenebis[3-(3,5-di-t-butyl-4-(hydroxyphenyl)propio namide), and pentaerythritol tetrakis[3-(3,5-di-tert-butyl-4-hydroxyphenyl)propionate].

The amount of mixing of the antioxidant, when contained in the thermoplastic resin composition used in this invention, is 0.01 to 5 parts by weight per 100 parts by weight of the resin component, and more preferably 0.05 to 3 parts by weight.

The thermoplastic resin composition used in this invention may contain only a single species of antioxidant, or two or more species. When two or more species are contained, the total content falls within the above-described ranges.

### Hydrolysis Resistance Modifier

The thermoplastic resin composition used in this invention may contain a hydrolysis resistance modifier. The hydrolysis resistance modifier is beneficial in particular when a polyester resin is contained as the thermoplastic resin. The hydrolysis resistance modifier employed here may be any of known compounds, and is exemplified by carbodiimide compound, epoxy compound, oxazoline compound and oxazine compound.

The carbodiimide compound used as the hydrolysis resistance modifier in this invention has at least two carbodiimide groups (-N=C=N-) in one molecule, and may be manufactured typically by subjecting a polyfunctional isocyanate compound, having at least two isocyanate groups in one molecule, to decarbonation condensation (carbodiimidation reaction), under the presence of a carbodiimidation catalyst. The carbodiimidation reaction may be allowed to proceed by any of known methods. More specifically, the condensation associated by decarbonization (carbodiimidation reaction) may be allowed to proceed in such a way that an isocyanate is dissolved into an inert solvent, or kept in a solvent-less state under flow or under bubbling of nitrogen gas or other inert gas, a carbodiimidation catalyst such as an organic phosphorus-containing compound, represented by phosphorene oxide, is added, and the mixture is then heated and stirred within the temperature range of 150 to 200°C.

Although bifunctional isocyanate having two isocyanate groups in one molecule is particularly preferable as the polyfunctional isocyanate compound, it is also possible to use an isocyanate compound having three or more isocyanate groups in combination with the diisocyanate. The polyfunctional isocyanate compound may alternatively be any of aliphatic isocyanate, alicyclic isocyanate and aromatic isocyanate. Specific examples of the polyfunctional isocyanate include, but not limited to, hexamethylene diisocyanate (HDI), hydrogenated xylylene diisocyanate (H6XDI), xylylene diisocyanate (XDI), 2,2,4-trimethylhexamethylene diisocyanate (TMHDI), dodecane 1,12-diisocyanate (DDI), norbornane diisocyanate (NBDI), 2,4-bis-(8-isocyanatooctyl)-1,3-dioctyl cyclobutane (OCDI), 4,4'-dicyclohexylmethane diisocyanate (HMDI), tetramethylxylylene diisocyanate (TMXDI), isophorone diisocyanate (IPDI), 2,4,6-triisopropylphenyl diisocyanate (TIDI), 4,4'-diphenylmethane diisocyanate (MDI), tolylene diisocyanate (TDI), and hydrogenated tolylene diisocyanate (HTDI).

The carbodiimide compound suitably used in this invention is a carbodiimide compound derived from HMDI or MDI, or may be commercially available "Carbodilite" (from Nisshinbo Chemical Inc.), or "Stabaxol P" (from Rhein Chemie Japan Ltd.).

The epoxy compound used as the hydrolysis resistance modifier in this invention is exemplified by bisphenol A-type epoxy compound, bisphenol F-type epoxy compound, resorcin-type epoxy compound, novolac-type epoxy compound, alicyclic compound-type diepoxy compound, glycidyl ethers and epoxylated polybutadiene, and is more specifically by bisphenol A-type epoxy compound, bisphenol F-type epoxy compound, resorcin-type epoxy compound, novolac-type epoxy compound, and alicyclic compound-type epoxy compounds such as vinylcyclohexene dioxide and dicyclopentadiene oxide. In view of chemical resistance and dispersibility into resin, the epoxy compound more preferably used is a novolac-type epoxy resin having an epoxy equivalent of 150 to 280 g/eq, or bisphenol A-type epoxy resin having an epoxy equivalent of 600 to 3000 g/eq. More preferable examples include a novolac-type epoxy resin having an epoxy equivalent of 180 to 250 g/eq and a molecular weight of 1000 to 6000, or a bisphenol A-type epoxy resin having an epoxy equivalent of 600 to 3000 g/eq and a molecular weight of 1200 to 6000. The values of epoxy equivalent and molecular weight employed here are catalog values.

The compound having an oxazoline group (ring) is exemplified by oxazoline, alkyl oxazoline (C1-4 alkyl oxazolines such as 2-methyloxazoline and 2-ethyloxazoline), and bisoxazoline compound. The bisoxazoline compound is exemplified by 2,2'-bis(2-oxazoline); 2,2'-bis(alkyl-2-oxazoline) [2,2'-bis(C1-6 alkyl-2-oxazoline), etc. such as 2,2'-bis(4-methyl-2-oxazoline), 2,2'-bis(4-ethyl-2-oxazoline) and 2,2'-bis(4,4-dimethyl-2-oxazoline)]; 2,2'-bis(aryl-2-oxazoline) [2,2'-bis(4-phenyl-2-oxazoline), etc.]; 2,2'-bis(cycloalkyl-2-oxazoline) [2,2'-bis(4-cyclohexyl-2-oxazoline), etc.]; 2,2'-bis(aralkyl-2-oxazoline) [2,2'-bis(4-benzyl-2-oxazoline), etc.]; 2,2'-alkylene bis(2-oxazoline) [2,2'-C1-10 alkylene bis(2-oxazoline), etc. such as 2,2'-ethylenebis(2-oxazoline) and 2,2'-tetramethylenebis(2-oxazoline)] ; 2,2'-alkylenebis(alkyl-2-oxazoline) [2,2'-C1-10 alkylene bis(C1-6 alkyl-2-oxazoline), etc. such as 2,2'-ethylenebis(4-methyl-2-oxazoline) and 2,2'-tetramethylenebis(4,4-dimethyl-2-oxazoline)] ; 2,2'-arylenebis(2-oxazoline), 2,2'-(1,3-phenylene)-bis(2-oxazoline), 2,2'-(1,4-phenylene)-bis(2-oxazoline), 2,2'-(1,2-phenylene)-bis(2-oxazoline), and 2,2'-diphenylenebis(2-oxazoline)], [2,2'-diphenylenebis(2-oxazol ine), etc.; 2,2'-arylenebis(alkyl-2-oxazoline) [2,2'-phenylene-bis(Cl-6 alkyl-2-oxazoline), etc. such as 2,2'-(1,3-phenylene)-bis(4-methyl-2-oxazoline) and 2,2'-(1,4-phenylene)-bis(4,4-dimethyl-2-oxazoline)]; 2,2'-aryloxyalkanebis(2-oxazoline) [2,2'-9,9'-diphenoxyethanebis(2-oxazoline), etc.]; 2,2'-cycloalkylene bis(2-oxazoline) [2,2'-cyclohexylenebis(2-oxazoline), etc.]; N,N'-alkylenebis(2-carbamoyl-2-oxazoline) [N,N'-C1-10 alkylenebis(2-carbamoyl-2-oxazoline), etc. such as N,N'-ethylenebis(2-carbamoyl-2-oxazoline) and N,N'-tetramethylenebis(2-carbamoyl-2-oxazoline)] ; N,N'-alkylenebis(2-carbamoyl-alkyl-2-oxazoline) [N,N'-C1-10 alkylene bis(2-carbamoyl-C1-6 alkyl-2-oxazoline), etc. such as N,N'-ethylenebis(2-carbamoyl-4-methyl-2-oxazoline) and N,N'-tetramethylenebis(2-carbamoyl-4,4-dimethyl-2-oxazoline)]; and N,N'-arylenebis(2-carbamoyl-2-oxazoline) [N,N'-phenylenebis(2-carbamoyl-oxazoline), etc.]. The compound having an oxazoline group also includes vinyl polymers having oxazoline groups [Epocros RPS Series, RAS Series and RMS Series, etc., all from Nippon Shokubai Co., Ltd.,]. Among these oxazoline compounds, bisoxazoline compound is preferable.

The compound having an oxazine group (ring) is exemplified by oxazine and bisoxazine compound. The bisoxazine compound is exemplified by 2,2'-bis(5,6-dihydro-4H-1,3-oxazine); 2,2'-bis(alkyl-5,6-dihydro-4H-1,3-oxazine) [2,2'-bis(C1-6 alkyl-5,6-dihydro-4H-1,3-oxazine), etc., such as 2,2'-bis(4-methyl-5,6-dihydro-4H-1,3-oxazine), 2,2'-bis(4,4-dimethyl-5,6-dihydro-4H-1,3-oxazine) and 2,2'-bis(4,5-dimethyl-5,6-dihydro-4H-1,3-oxazine)]; 2,2'-alkylenebis(5,6-dihydro-4H-1,3-oxazine) [2,2'-C1-10 alkylenebis(5,6-dihydro-4H-1,3-oxazine), etc., such as 2,2'-methylenebis(5,6-dihydro-4H-1,3-oxazine), 2,2'-ethylenebis(5,6-dihydro-4H-1,3-oxazine) and 2,2'-hexanemethylenebis(5,6-dihydro-4H-1,3-oxazine)]; 2,2'-arylenebis(5,6-dihydro-4H-1,3-oxazine) [2,2'-(1,3-phenylene)-bis(5,6-dihydro-4H-1,3-oxazine), 2,2'-(1,4-phenylene)-bis(5,6-dihydro-4H-1,3-oxazine), 2,2'-(1,2-phenylene)-bis(5,6-dihydro-4H-1,3-oxazine), 2,2'-naphthylenebis(5,6-dihydro-4H-1,3-oxazine), 2,2'-diphenylenebis(5,6-dihydro-4H-1,3-oxazine), etc.]; N,N'-alkylenebis(2-carbamoyl-5,6-dihydro-4H-1,3-oxazine) [N,N'-C1-10 alkylenebis(2-carbamoyl-5,6-dihydro-4H-1,3-oxazine), etc., such as N,N'-ethylenebis(2-carbamoyl-5,6-dihydro-4H-1,3-oxazine) and N,N'-tetramethylenebis(2-carbamoyl-5,6-dihydro-4H-1,3-oxazine)] ; N,N'-alkylene bis(2-carbamoyl-alkyl-5,6-dihydro-4H-1,3-oxazine) [N,N'-C1-10 alkylene bis(2-carbamoyl-C1-6 alkyl-5,6-dihydro-4H-1,3-oxazine) etc., such as N,N'-ethylenebis(2-carbamoyl-4-methyl-5,6-dihydro-4H-1,3-oxazin e) and N,N'-hexamethylenebis(2-carbamoyl-4,4-dimethyl-5,6-dihydro-4H-1 ,3-oxazine)]; and N,N'-arylenebis(2-carbamoyl-5,6-dihydro-4H-1,3-oxazine) [N,N'-phenylenebis(2-carbamoyl-oxazine), etc.]. Among these oxazine compounds, bisoxazine compound is preferable.

The amount of mixing of the hydrolysis resistance modifier, when mixed, is preferably 0.05 to 3 parts by weight per 100 parts by weight of the thermoplastic resin, and more preferably 0.1 to 2 parts by weight.

### Mold Releasing Agent

The thermoplastic resin composition used in this invention may contain a mold releasing agent. The mold releasing agent is preferably at least one compound selected from aliphatic carboxylic acid, aliphatic carboxylic acid ester, aliphatic hydrocarbon compound having a number average molecular weight of 200 to 15000 and polyolefinic compound. Among them, at least one compound selected from polyolefinic compound, aliphatic carboxylic acid, and aliphatic carboxylic acid ester is preferably used.

The aliphatic carboxylic acid is exemplified by saturated or unsaturated, aliphatic monocarboxylic acid, dicarboxylic acid and tricarboxylic acid. In this specification, the term "aliphatic carboxylic acid" is used to encompass alicyclic carboxylic acid. Among the aliphatic carboxylic acid, preferable is mono or dicarboxylic acid having 6 to 36 carbon atoms, and more preferable is aliphatic saturated monocarboxylic acid having 6 to 36 carbon atoms. Specific examples of such aliphatic carboxylic acid include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid and azelaic acid.

The aliphatic carboxylic acid component used for composing the aliphatic carboxylic acid ester may be same as the above-described aliphatic carboxylic acid. Meanwhile, the alcohol component for composing the aliphatic carboxylic acid ester may be exemplified by saturated or unsaturated monohydric alcohol, and saturated or unsaturated polyhydric alcohol. These alcohols may have a substituent such as fluorine atom or aryl group. Among these alcohols, preferable is monohydric or polyhydric saturated alcohol having 30 or smaller number of carbon atoms, and more preferable is aliphatic saturated monohydric or polyhydric alcohol having 30 or smaller number of carbon atoms. The aliphatic alcohol encompasses alicyclic alcohol. Specific examples of these alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol. These aliphatic carboxylic acid esters may contain aliphatic carboxylic acid and/or alcohol as an impurity, and may be a mixture of a plurality of compounds. Specific examples of the aliphatic carboxylic acid ester include beeswax (a mixture containing myricyl palmitate as a major constituent), stearyl stearate, behenyl behenate, octyldodecyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate.

The polyolefinic compound is exemplified by a compound selected from paraffin wax and polyethylene wax, among which polyethylene wax having a weight average molecular weight of 700 to 10,000, and particularly 900 to 8,000, is preferable, taking a good dispersibility of the polyolefinic compound into consideration.

The amount of mixing of the mold releasing agent, when contained in the thermoplastic resin composition used in this invention, is 0.01 to 5 parts by weight, and more preferably 0.05 to 3 parts by weight per 100 parts by weight of the resin component. The thermoplastic resin composition used in this invention may contain a single species of the mold releasing agent, or may contain two or more species. When two or more species are contained, the total content falls within the above-described ranges.

The thermoplastic resin composition used in this invention may contain other component without departing from the spirit of this invention. Such other component is exemplified by stabilizers other than the phosphorus-containing stabilizer, UV absorber, inorganic filler other than those described above, white pigment other than titanium oxide, fluorescent brightener, antidripping agent, antistatic agent, anticlouding agent, lubricant, antiblocking agent, fluidity modifier, plasticizer, dispersing agent, and antimicrobial agent. These compounds may be used independently, or two or more compounds may be used in combination.

Regarding these components, the descriptions in JP-A-2007-314766, JP-A-2008-127485, JP-A-2009-51989 and JP-A-2012-72338 may be referred to, the contents of which are incorporated into this specification.

### <Method for manufacturing Thermoplastic Resin Composition and Method for manufacturing Resin Molded Article>

Methods of manufacturing the thermoplastic resin composition used in this invention are widely selectable, without special limitation, from known methods of manufacturing the thermoplastic resin composition. More specifically, the resin composition may be manufacture by preliminarily mixing the individual components using any of various types of mixers such as tumbler, Henschel mixer or the like, and then melt-kneading the mixture using a Banbury mixer, roll mixer, Brabender mixer, single-screw kneader extruder, twin-screw kneader extruder, kneader or the like.

Alternatively, the thermoplastic resin composition may be manufactured by putting the individual components, without being preliminarily mixed or only partially mixed, through a feeder into an extruder, and then melt-kneading them.

Still alternatively, the thermoplastic resin composition may be manufactured by preliminarily mixing a part of components and feeding the mixture to an extruder for melt-kneading, mixing the thus-obtained resin composition as a master batch into the residual component(s), and again melt-kneading the mixture.

Methods of manufacturing the resin molded article from the thermoplastic resin composition is not specifically limited, and any of molding methods having widely been used for thermoplastic resin, including typical injection molding, ultra-high-speed injection molding, injection compression molding, two color molding, hollow molding such as gas-assisted molding, molding using heat insulation dies, molding using rapid heating dies, foam molding (including supercritical fluid), insert molding, IMC (in-mold coating) molding, extrusion molding, sheet forming, thermoforming, rotational molding, laminate molding, and press forming are employable. Also a molding process based on a hot-runner system is selectable.

### <Method for manufacturing Resin Molded Article with Plated layer>

The method for manufacturing a resin molded article with a plated layer according to this invention characteristically include, as illustrated in FIG. 2, applying the laser direct structuring layer-forming composition, to the surface of a resin molded article 21;after curing; and irradiating laser to form a plated layer 24.

With such configuration, it becomes now possible to form the plated layer on the surface of the resin molded article, even without adding the LDS additive to the thermoplastic resin composition.

Methods of applying the LDS layer-forming composition to the surface of the resin molded article is preferably coating, but not specifically limited thereto. The coating includes not only brush coating, but also so-called hand coating. In this invention, the LDS layer-forming composition is preferably stirred before being applied to the surface of the resin molded article. As a result of stirring, the LDS layer will have the LDS additive which is more uniformly dispersed therein.

The LDS layer-forming composition is preferably applied so that the LDS layer after dried will have an average thickness of 0.1 to 1000 µm, and more preferably 0.5 to 300 µm.

The resin molded article of this invention may be a flat substrate, or may be a resin molded article that partially or entirely curves. The surface of the resin molded article on which the plating layer is formed may be rough or may be smooth. Conventionally known methods for forming a plating layer have roughen the surface of the resin molded article prior to plating. In contrast, this invention has an advantage in that the plating layer can be formed even on the smooth surface of the resin molded article.

The resin molded article is not limited to the final product, but encompasses various parts. The resin molded article of this invention is preferably applied to parts of mobile electronic devices, vehicles and medical equipment; and other electronic devices that contain electronic circuits. In particular, since the resin molded article has high impact resistance and rigidity, excellent heat resistance, small anisotropy and small warpage, so that it is extremely effective for internal structures and enclosures of PDAs such as electronic organizer and mobile computer, pager, mobile phone and PHS. The resin molded article is particularly suitable for flat plate-like parts having an average thickness, excluding the rib, of 1.2 mm or below (the lower limit is typically, but not specifically limited to, 0.4 mm or above), and especially suitable for enclosures of mobile electronic devices.

The resin molded article may even have a roughened surface, but may not have a roughened surface. In particular, unlike the known methods for forming the plating layer, this invention is advantageous in that the plating layer may be formed even on the non-roughened surface of the resin molded article, while achieving high adhesiveness. The roughening in this context is exemplified by filing, and primer treatment with solvent.

Referring now back to FIG. 2, after the LDS layer-forming composition is coater over the surface of the resin molded article 21, the curable compound is allowed to cure by UV irradiation, heating or other means . As a result of curing of the curable compound, also the LDS additive is immobilized.

Next, in this invention, the LDS layer 22 provided over the surface of the resin molded article 21 is irradiated with laser. The laser is suitably selectable from known lasers including YAG laser, excimer laser, and electromagnetic radiation, without special limitation. YAG laser is preferable. Also the wavelength of laser is not specifically limited, and preferably ranges from 200 nm to 1,200 nm, and particularly from 800 to 1,200 nm. When a UV curable compound is used as the curable compound, it is preferable to irradiate a laser of 800 to 1,200 nm, so as to avoid UV-assisted formation of the plating layer.

Upon irradiation with laser, the LDS additive 23 is activated only in the area irradiated with laser. With the LDS additive 23 thus activated, a plating liquid is applied to the resin molded article 21 with the LDS layer 22. The plating liquid is selectable from a wide range of known plating liquids, without special limitation, and preferably selectable from those containing copper, nickel, gold or palladium as a metal component. Copper is more preferable.

Also there is no special limitation on the method for applying the plating liquid to the resin molded article 21 with the LDS layer 22. An exemplary method is such as placing the article into a bath that contains the plating liquid. On the resin molded article to which the plating liquid was thus applied, the plating layer 24 is formed only in the area where the laser has been irradiated.

According to this invention, it now becomes possible to achieve a circuit pitch of 1 mm or narrower, and of even 150 µm or narrower (the lower limit is 30 µm or above, although not specifically limited). Such circuit may suitably be used as antennas in portable electronic devices. That is, one preferred embodiment of the resin molded article is exemplified by a resin molded article having the plating layer that functions as an antenna, provided on the surface of a portable electronic device.

The resin molded article with a plating layer of this invention is preferably manufactured by using the kit of this invention.

### EXAMPLES

This invention will further be detailed below referring to Examples. Note that materials, amounts of consumption, ratios, process details, and process procedures described in Examples below may properly be modified without departing from the spirit of this invention. Accordingly, the scope of this invention is by no means limited by the specific examples illustrated below.

### <Resin>

PAMXD6: polymetaxylylene adipamide, S6007, from Mitsubishi Gas Chemical Company, Inc.
Amilan (registered trademark) CM3001-N: polyamide resin, from Toray Industries, Inc.
PC: polycarbonate resin, Iupilon S-3000, from Mitsubishi Engineering-Plastics Corporation
PBT: polybutylene terephthalate resin, 5008/F, from Mitsubishi Chemical Company

### <Glass Fiber>

03T-296GH: from Nippon Electric Glass Co., Ltd.
T-571: from Nippon Electric Glass Co., Ltd.
T-127: from Nippon Electric Glass Co., Ltd.

### <Talc>

Micron White 5000S: from Hayashi Kasei Co., Ltd.

### <Mold Releasing Agent>

Hostamont NAV101: from Hoechst AG
Hoechst Wax E Powder: from Clariant Japan K.K.
CS-8CP: from Nitto Kasei Co., Ltd.
PE520 polyethylene wax: from Clariant Japan K.K.

### <Flame-retardant>

PATOX-M: antimony trioxide, from Nihon Seiko Co., Ltd.
Great Lakes PDBS-80: polydibromostyrene, from Great Lakes Chemical Corporation
KFBS: potassium perfluorobutanesulfonate, from Mitsubishi Materials Corporation
PTFE-6J: polytetrafluoroethylene, from Du Pont-Mitsui Fluorochemicals Co., Ltd.
PX-200: resorcinol bis-2,6-xylenylphosphate, from Daihachi Chemical Industry Co., Ltd.
FP-110: phenoxyphosphazene compound, from FUSHIMI Pharmaceutical Co., Ltd.

### <Hydrolysis Resistance Modifier>

Adeka Sizer EP-17: from Adeka Corporation

### <Antioxidant>

IRGANOX 1010: from BASF

### <Pigment>

CB-1: carbon black, #45, from Mitsubishi Chemical Company
ZnS: zinc sulfide, Sachtolith HDS, from Sachtleben Chemie GmbH RB948G: carbon black, from Koshigaya Kasei Co., Ltd.
CB-2: carbon black, #650B, from Mitsubishi Chemical Company

### <Coating material>

### Coating material 1: Urethane-based heat curable coating material: Retan PG80III Clear, from Kansai Coating material Co., Ltd.

Per 100 parts by weight of the urethane resin, added were 10 parts by weight of a hardener, and 100 parts by weight of thinner as the organic solvent, and the mixture was used as a curable compound.

### Coating material 2: Acrylic urethane-based heat curable coating material: nax MIGHTYLAC G-II KB-type Clear, from Nipponcoating material Co., Ltd.

Per 100 parts by weight of the acrylic urethane resin, added were 25 parts by weight of a hardener, and 125 parts by weight of thinner as the organic solvent, and the mixture was used as a curable compound.

### Coating material 3: Urethane-based heat curable coating material: HIGH-METAL KD2850 Silver, from Cashew Co., Ltd.

Per 100 parts by weight of the urethane-based resin, added was 150 parts by weight of thinner as the organic solvent, and the mixture was used as a curable compound.

### Coating material 4: Urethane-based UV curable coating material: 6110 Clear, from Cashew Co., Ltd.

Per 100 parts by weight of the urethane-based resin, added was 50 parts by weight of thinner as the organic solvent, and the mixture was used as a curable compound.

### Coating material 5: Epoxy-based heat curable coating material: MILLION Clear, from Kansai Coating material Co., Ltd.

Per 80 parts by weight of the epoxy resin, added were 20 parts by weight of a hardener, and 50 parts by weight of thinner as the organic solvent, and the mixture was used as a curable compound. Coating material 6: Polyvinylchloride-based coating material (cold curing type) : Vinybon 100 Clear, from Kansai Coating material Co. , Ltd.

Per 100 parts by weight of the polyvinylchloride, added was 80 parts by weight of thinner as the organic solvent, and the mixture was used as a curable compound.

### <LDS Additive>

Black 1G: from The Shepherd Color Company
CP5C: antimony doped tin oxide (95% by weight of tin oxide, 5% by weight of antimony oxide, 0.02% by weight of lead oxide, 0.004% by weight of copper oxide) (from Keeling & Walker Limited) 23K: from Hakusuitech Co., Ltd., alminium doped zinc oxide, Resistivity (product standards value) 100 to 500 Ω·cm

### <Compound of Thermoplastic Resin Composition>

Each of the individual components were precisely weight following the compositional ratio listed in Table shown later, the components excluding the glass fiber were blended in a tumbler, fed into a twin-screw extruder (TEM26SS, from Toshiba Machine Co., Ltd.) from the base thereof and melted, to which the glass fiber was fed from the side to manufacture resin pellets (thermoplastic resin composition). The temperature of extruder was set to 280°C for Examples 1 to 18, and Comparative Examples 1 to 8; set to 290°C for Examples 19 to 22, Examples 25 to 31, and Comparative Examples 9 to 12, Comparative Examples 14, and Reference Examples; and set to 260°C for Example 23, 24, and Comparative Example 13.

### <Test Plate>

The resin was molded by feeding the resin into dies having a 60 × 60 mm cavity with a thickness of 2 mm, through a 60 mm wide fan gate with a thickness of 1.5 mm. The gate portion was cut off to obtain a plate test specimen. Color of the obtained test specimen was visually observed.

### <Bending Strength>

The resin pellets manufactured as described above were dried at 120°C for 4 hours, and made into an ISO tensile test piece of 4 mm thick, by injection molding using SG125-MII from Sumitomo Heavy Industries, Ltd.

Cylinder temperature and die temperature were respectively set to 280°C and 130°C for Examples 1 to 18 and Comparative Examples 1 to 8; set to 260°C and 80°C for Examples 23, 24, Comparative Example 13; and set to 280°C and 80°C for Examples 19 to 22, Examples 25 to 31, Comparative Examples 10 to 12, Comparative Example 14, and Reference Example.

Bending strength (in MPa) of the ISO tensile test piece (4 mm thick) was measured at 23°C, according to ISO 178.

### <Charpy Impact Strength>

Using the ISO tensile test specimen (4 mm thick) obtained above, notched and unnotched Charpy impact strengths (in KJ/m²) were measured in compliance with ISO 179 at 23°C.

### <Preparation of LDS Layer-Forming Composition and Coating on Test plate>

### <<Examples 1 to 17, Comparative Example 2>>

The coating material and the LDS additive were mixed using a spatula according to the composition listed in Table below, to prepare each LDS layer-forming composition (LDS layer-forming coating material). The surface of the test plate obtained as described above was degreased using isopropanol, and the LDS layer-forming composition was spray-coated over the surface of the test plate. The coating was allowed to stand still for 10 minutes for fixation, and baked at 80°C for 30 minutes.

### <<Comparative Examples 1, 3 to 8>>

The test plate obtained as described above was used without spray-coating of the LDS layer-forming composition, but used after the surface was degreased using isopropanol.

### <<Example 18>>

The procedures of Example 18 were conducted in the same way as in Example 1, except that the fixing time was set to 20 minutes, the test plate was allowed to stand still at 40°C for 20 minutes for pre-drying, and then baked at 70°C for 50 minutes.

### <<Examples 19 to 21, Comparative Example 9, Example 25, Examples 27 to 30, Examples 32 to 39>>

The coating material, the thinner, and the LDS additive were mixed using a spatula according to the composition listed in Table below, to prepare each LDS layer-forming composition (LDS layer-forming coating material). The surface of the test plate obtained as described above was cleaned using a neutral detergent, and further cleaned using methanol. The LDS layer-forming composition was coated on the test plate using a brush. The coating was allowed to cure at 70°C for 10 minutes.

### <<Example 22, Comparative Example 10, Example 26, Example 31, Examples 40 to 42>>

The coating material, the thinner, and the LDS additive were mixed using a spatula according to the composition listed in Table below, to prepare each LDS layer-forming composition (LDS layer-forming coating material). The surface of the test plate obtained as described above was cleaned using a neutral detergent, and further cleaned using methanol. The LDS layer-forming composition was coated on the test plate using a brush. The coating was pre-heated at 60°C for 5 minutes, and was then irradiated with UV light at an dose of 1,000 mJ/cm² for curing.

### <<Comparative Examples 11, 12, Reference Example, Comparative Example 14>>

The test plate obtained as described above was used without coating of the LDS layer-forming composition, but used after the surface was cleaned using a neutral detergent, and further cleaned using methanol.

### <<Example 23>>

The coating material and the LDS additive were mixed using a spatula according to the composition listed in Table below, to prepare an LDS layer-forming composition (LDS layer-forming coating material). The surface of the test plate obtained as described above was degreased using isopropanol, and the LDS layer-forming composition obtained as descried above was uniformly spray-coated over the surface of the test plate. The coating was allowed to stand still for 20 minutes, and then baked and dried at 100°C for 30 minutes.

### <<Example 24>>

The coating material and the LDS additive were mixed using a spatula according to the composition listed in Table below, to prepare an LDS layer-forming composition (LDS layer-forming coating material). The surface of the test plate obtained as described above was degreased using isopropanol, and the LDS layer-forming composition obtained as descried above was uniformly spray-coated over the surface of the test plate. The coating was allowed to stand still at 23°C for 48 hours.

### <<Comparative Example 13>>

The test plate was used as it is, after the surface was degreased using isopropanol.

### <Appearance of Plating (Platability)>

Within a 55 × 40 mm area on the thus obtained plate test specimen, laser was irradiated using a laser marker "LP-Z Series" from SUNX Co., Ltd. (YAG laser at 1064 nm, maximum output = 13 W), at an output of 100, 80, 60 or 40%, pulse periods of 50 psec and 20 psec, and a scanning speed of 2 m/s. The subsequent process of forming the plated layer was carried out using an electroless plating bath "MID Copper 100XB Strike" from MacDermid, Inc. at 70°C. The platability was judged by visually observing the thickness of plated layer over 10 minutes.

The platability was evaluated based on the number of square cells showing a good appearance without surface irregularity, from 10 square cells partitioned on each sample, ranked as below:
A: 9 to 10 cells (a good appearance observed over the entire surface of 10-cell sample, without showing irregularity);
B: 7 to 8 cells;
C: 4 to 6 cells;
D: 2 to 3 cells; and
E: 0 to 1 cell (a poor appearance observed over the entire surface of 10-cell sample, showing irregularity).

### <Flame Retardance>

The resin pellets manufactured as described above were dried at 120°C for 4 hours, and then molded into an UL test piece of 125 mm long, 13 mm wide and 1.6 mm thick, using Model J50-EP injection molding machine from Japan Steel Works, Ltd. The cylinder temperature and the die temperature were respectively set to 280°C and 130°C for Examples 1 to 18, and Comparative Examples 1 to 8; set to 260°C and 80°C for Examples 23, 24, and Comparative Example 13; and set to 280°C and 80°C for Examples 19 to 22, Examples 25 to 42, Comparative Examples 10 to 12, Comparative Example 14, and Reference Example.

The flame retardance of each resin composition was evaluated in compliance with UL 94 test (the Standard for Safety of Flammability of Plastic Materials for Parts in Devices and Appliances Testing), specified by Underwriters Laboratories Inc. (UL), USA, using the UL test specimen obtained as described above, having been moisture-conditioned in a thermostat chamber at 23°C and 50% humidity for 48 hours. UL94V is a method of evaluating the flame retardance based on the lingering flame time and dripping property, when a test specimen of a certain size is held vertically, and a burner flame is applied thereto for 10 seconds. The resin to be ranked at V-0, V-1 or V-2 needs to satisfy the criteria listed in Table below.

**[Table 1]**

| Table 1 | V-0 | V-1 | V-2 |
|---|---|---|---|
| Lingering Flame Time of Each Individual Test Specimen (s) | ≤10 sec | ≤30 sec | ≤30 sec |
| Total Lingering Flame Time (s) (5 flame applications) | ≤50 sec | ≤250 sec | ≤250 sec |
| Cotton Ignited by Flaming Drips | no | no | yes |

The lingering flame time refers to the duration of time over which the specimen sustains flaming combustion, after the ignition source was regressed. "Cotton ignited by flaming drips" is determined whether or not flaming drips ignite cotton placed approximately 300 mm below the lower end of the specimen. Even any one of five specimens did not satisfy the criteria, the resin was determined to not satisfy V-2, and evaluated as NR (not rated).

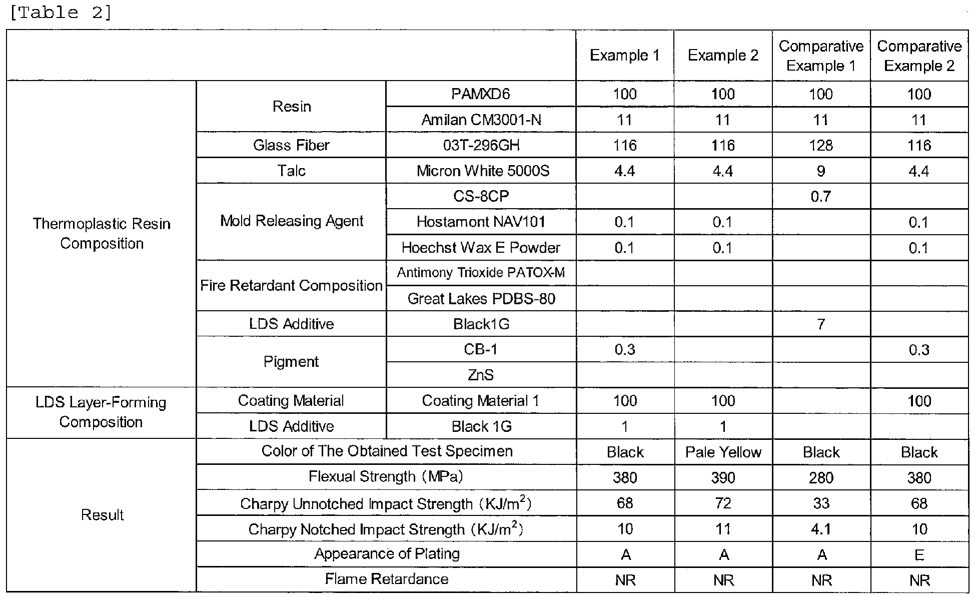

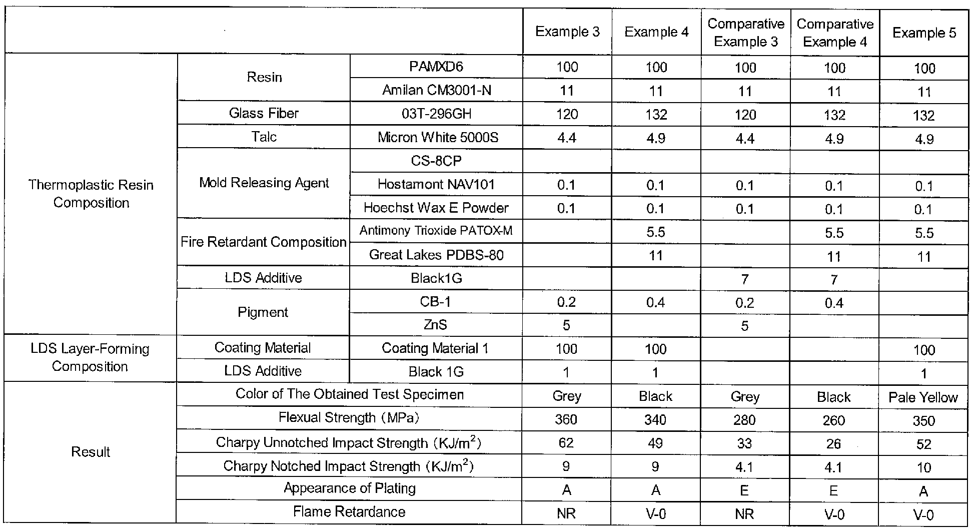

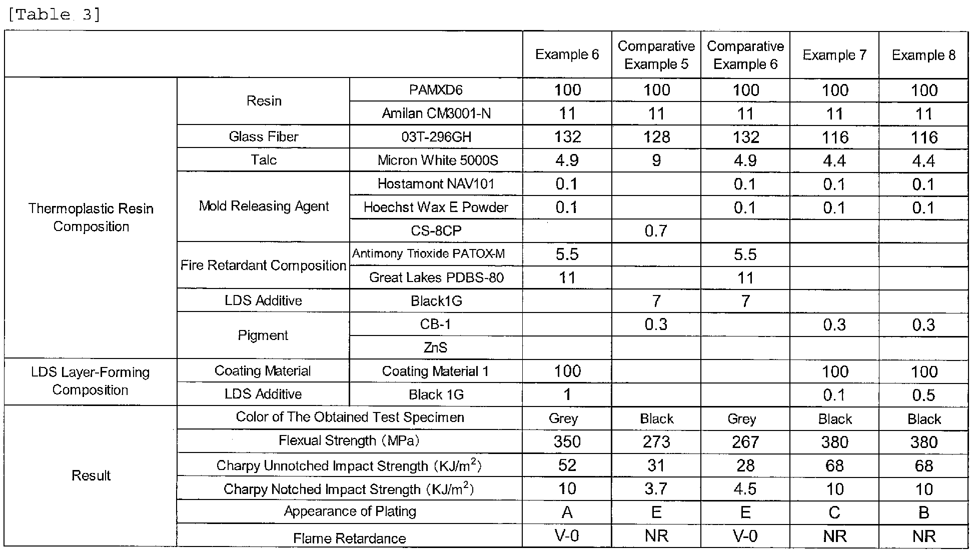

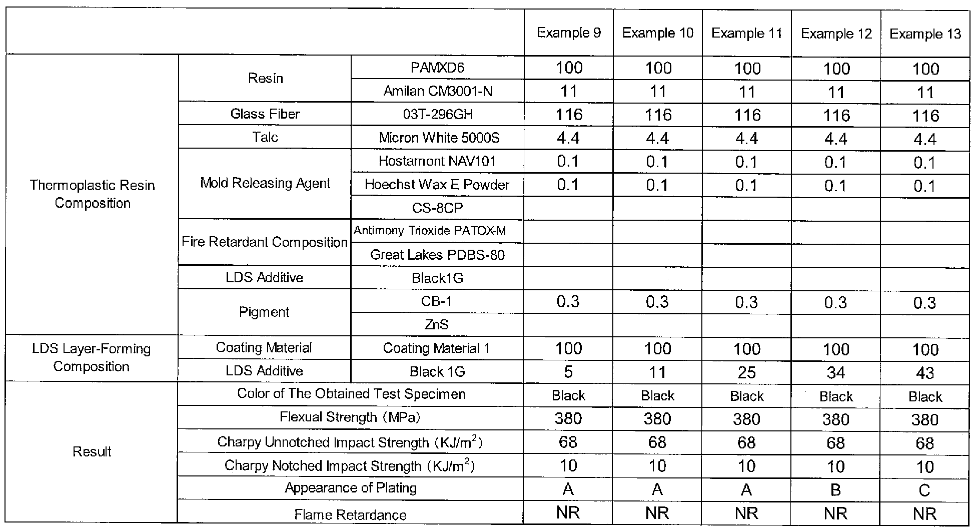

**[Table 4]**

| | | | Example 14 | Example 15 | Comparative Example 7 | Example 16 | Example 17 | Comparative Example 8 |
|---|---|---|---|---|---|---|---|---|
| Thermoplastic Resin Composition | Resin | PAMXD6 | 100 | 100 | 100 | 100 | 100 | 100 |
| | | Amilan CM3001-N | 11 | 11 | 11 | 11 | 11 | 11 |
| | Glass Fiber | 03T-296GH | 116 | 116 | 128 | 132 | 132 | 132 |
| | Talc | Micron White 5000S | 4.4 | 4.4 | 9 | 4.9 | 4.9 | 4.9 |
| | Mold Releasing Agent | Hostamont NAV101 | 0.1 | 0.1 | | 0.1 | 0.1 | 0.1 |
| | | Hoechst Wax E Powder | 0.1 | 0.1 | | 0.1 | 0.1 | 0.1 |
| | | CS-8CP | | | 0.7 | | | |
| | Fire Retardant Composition | Antimony Trioxide PATOX-M | | | | 5.5 | 5.5 | 5.5 |
| | | Great Lakes PDBS-80 | | | | 11 | 11 | 11 |
| | LDS Additive | CP5C | | | 7 | | | 7 |
| | Pigment | CB-1 | 0.3 | | | 0.4 | | |
| LDS Layer-Forming Composition | Coating Material | Coating Material 1 | 100 | 100 | | 100 | 100 | |
| | LDS Additive | Black 1G | | | | | | |
| | | CP5C | 1 | 1 | | 1 | 1 | |
| Result | Color of The Obtained Test Specimen | | Black | Pale Yellow | Grey | Black | Grey | Grey |
| | Flexual Strength (MPa) | | 380 | 390 | 252 | 340 | 350 | 240 |
| | Charpy Unnotched Impact Strength (KJ/m²) | | 68 | 72 | 30 | 49 | 52 | 25 |
| | Charpy Notched Impact Strength (KJ/m²) | | 10 | 11 | 3.7 | 9 | 10 | 4.0 |
| | Appearance of Plating | | B | C | A | B | C | E |
| | Flame Retardance | | NR | NR | NR | V-0 | V-0 | V-0 |

**[Table 5]**

| | | | Example 18 |
|---|---|---|---|
| Thermoplastic Resin Composition | Resin | PAMXD6 | 100 |
| | | Amilan CM3001-N | 11 |
| | Glass Fiber | 03T-296GH | 116 |
| | Talc | Micron White 5000S | 4.4 |
| | Mold Releasing Agent | CS-8CP | |
| | | Hostamont NAV101 | 0.1 |
| | | Hoechst Wax E Powder | 0.1 |
| | Fire Retardant Composition | Antimony Trioxide PATOX-M | |
| | | Great Lakes PDBS-80 | |
| | LDS Additive | Black 1G | |
| | Pigment | CB-1 | 0.3 |
| | | ZnS | |
| LDS Layer-Forming Composition | Coating Material | Coating Material 2 | 100 |
| | LDS Additive | Black 1G | 1 |
| Result | Color of The Obtained Test Specimen | | Black |
| | Flexual Strength (MPa) | | 380 |
| | Charpy Unnotched Impact Strength (KJ/m²) | | 68 |
| | Charpy Notched Impact Strength (KJ/m²) | | 10 |
| | Appearance of Plating | | A |
| | Flame Retardance | | NR |

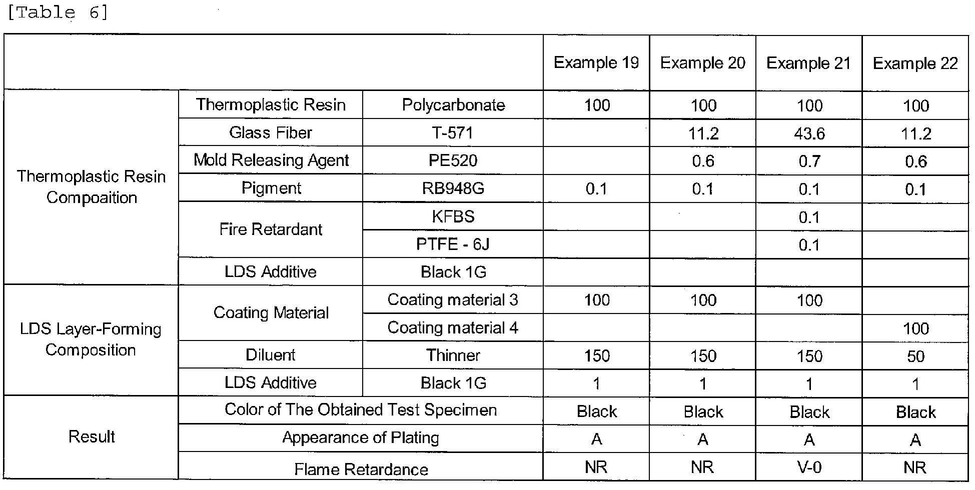

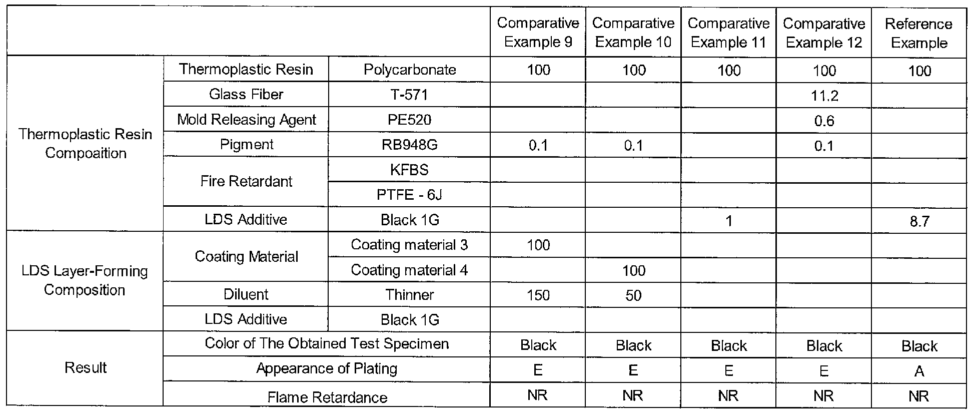

**[Table 7]**

| | | | Example 23 | Example 24 | Com parative Example 13 |
|---|---|---|---|---|---|
| Thermoplastic Resin Compoaition | Resin | PBT 5008/F | 100 | 100 | 100 |
| | Glass Fiber | T-127 | 43 | 43 | 43 |
| | Hydrolysis Modifier | ADK CIZER EP-17 | 0.6 | 0.6 | 0.6 |
| | Antioxidant | IRGANOX-1010 | 0.3 | 0.3 | 0.3 |
| | Pigment | CB-2 | 0.6 | 0.6 | 0.6 |
| LDS Layer-Forming Composition | Coating Material | Coating Material 5 | 100 | | |
| | | Coating Material 6 | | 100 | |
| | LDS Additive | Black 1G | 1 | 1 | |
| Result | Color of The Obtained Test Specimen | | Black | Black | Black |
| | Flexual Strength (MPa) | | 210 | 210 | 210 |
| | Charpy Unnotched Impact Strength | | 59 | 59 | 59 |
| | Charpy Notched Impact Strength | | 10 | 10 | 10 |
| | Appearance of Plating | | A | A | E |
| | Flame Retardance | | NR | NR | NR |

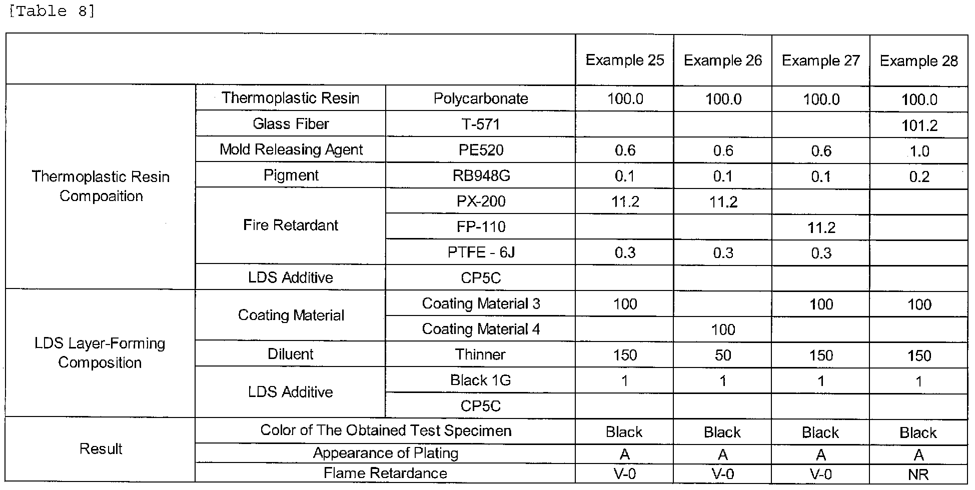

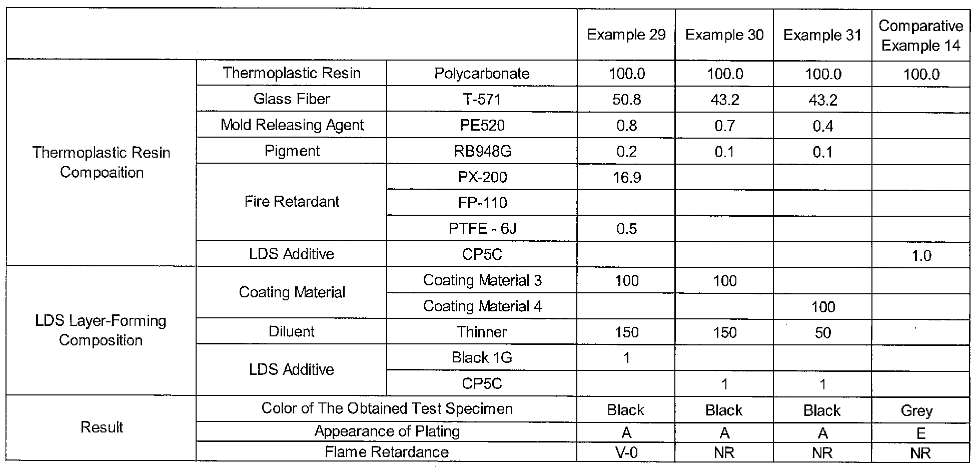

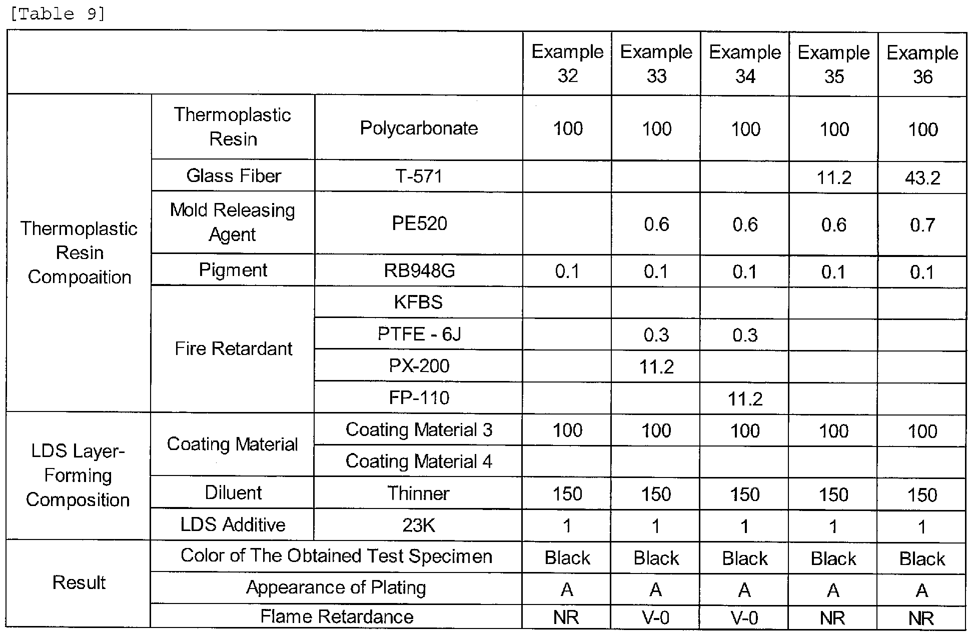

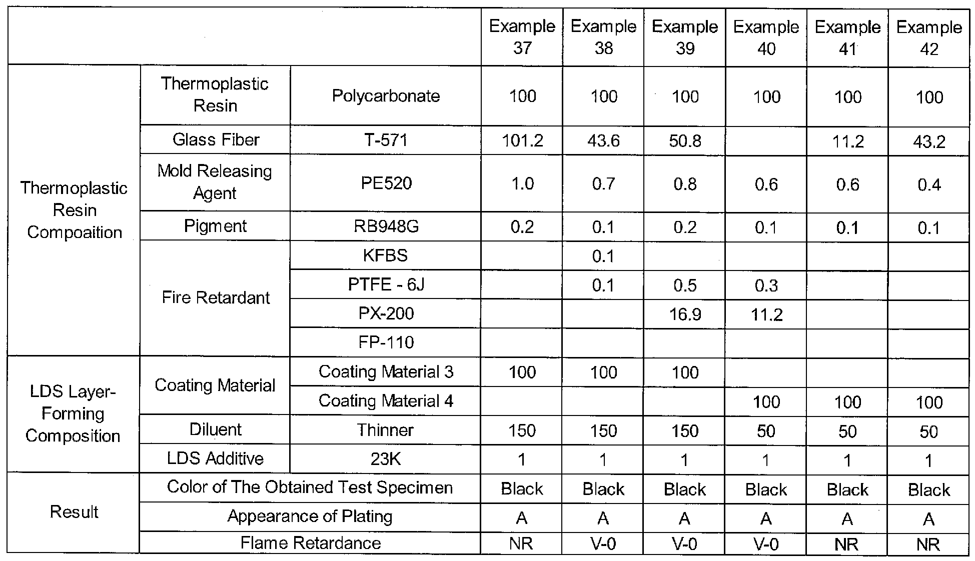

As is clear from the results above, good plating layers were formed on the surface of the resin molded article, by using the LDS layer-forming composition of this invention, even without adding the LDS additive to the thermoplastic resin composition. In particular, the plating layers were found to be strongly adhesive to the resin molded article, and were not peeled off so easily.

In contrast, when the LDS layer-forming composition was not used (Comparative Examples 1, 3 to 8, 11 to 14), a sufficient level of mechanical strength could not be achieved despite mixing of the glass fiber, or a sufficient level of platability could not be achieved despite mixing of the LDS additive.

Comparative Examples 2, 9, 10 disusing the LDS additive failed in forming the plating layers.

### REFERENCE SIGNS LIST

11 resin molded article
12 LDS additive
13 plated layer
21 resin molded article
22 LDS layer
23 LDS additive
24 plated layer
25 LDS layer in unirradiated portion

## Claims

1. A laser direct structuring layer-forming composition comprising: a curable compound, an organic solvent, and a laser direct structuring additive.

2. The laser direct structuring layer-forming composition of Claim 1, wherein the curable compound is a resin.

3. The laser direct structuring layer-forming composition of Claim 1 or 2, wherein the curable compound is a UV curable compound or a heat curable compound.

4. The laser direct structuring layer-forming composition of any one of Claims 1 to 3, containing 0.05 to 70 parts by weight of the laser direct structuring additive, per 100 parts by weight in total of the curable compound and the organic solvent.

5. The laser direct structuring layer-forming composition of any one of Claims 1 to 4, which is contains 20 to 80% by weight of the curable compound.

6. A kit comprising: the laser direct structuring layer-forming composition described in any one of Claims 1 to 5, and a thermoplastic resin composition that contains a thermoplastic resin.

7. The kit of Claim 6, wherein the thermoplastic resin composition contains substantially no laser direct structuring additive.

8. The kit of Claim 6 or 7, wherein the thermoplastic resin is a crystalline resin.

9. The kit of Claim 8, wherein the crystalline resin is a polyamide resin.

10. The kit of Claim 8, wherein the crystalline resin is a thermoplastic polyester resin.

11. The kit of Claim 6 or 7, wherein the thermoplastic resin is an amorphous resin.

12. The kit of Claim 11, wherein the amorphous resin is a polycarbonate resin.

13. The kit of any one of Claims 6 to 12, wherein the thermoplastic resin composition contains a dye and/or a pigment, and/or a flame retardant composition.

14. The kit of any one of Claims 6 to 12, wherein the thermoplastic resin composition contains a pigment and/or flame retardant composition.

15. The kit of any one of Claims 6 to 14, wherein the thermoplastic resin composition contains a black dye or a black pigment.

16. The kit of any one of Claims 6 to 15, wherein the thermoplastic resin composition contains at least one of an antimony-containing flame retardant and an antimony-containing flame retardant auxiliary.

17. The kit of any one of Claims 6 to 16, wherein the thermoplastic resin composition contains a halogen-containing flame retardant.

18. The kit of any one of Claims 6 to 15, wherein the thermoplastic resin composition contains a phosphorus-containing flame retardant.

19. The kit of Claim 18, wherein the phosphorus-containing flame retardant contains at least one selected from condensed phosphoric ester and phosphazene compound.

20. The kit of any one of Claims 6 to 15, wherein the thermoplastic resin composition contains an organometallic salt-based flame retardant.

21. A method for manufacturing a resin molded article with a plating layer, the method comprising:
applying the laser direct structuring layer-forming composition described in any one Claims 1 to 5, onto the surface of a thermoplastic resin molded article, followed by curing; and
then irradiating a laser to form the plating layer.

22. The method for manufacturing a resin molded article with a plating layer of Claim 21, wherein the thermoplastic resin molded article contains a crystalline resin.

23. The method for manufacturing a resin molded article with a plating layer of Claim 21, wherein the thermoplastic resin molded article contains an amorphous resin.

24. The method for manufacturing a resin molded article with a plating layer of any one of Claims 21 to 23, using the kit described in any one of Claims 6 to 20.
